# EUROPEAN PATENT APPLICATION

(11) **EP 4 675 701 A1**
(43) Date of publication of application: **07.01.2026**
(21) Application number: 23942110.0
(22) Date of filing: 30.10.2023
(51) Int. Cl.: H01M 4/36, H01M 4/525, H01M 4/505, H01M 4/485

(54) **POSITIVE ELECTRODE ACTIVE MATERIAL AND PREPARATION METHOD THEREFOR, POSITIVE ELECTRODE SHEET, BATTERY AND ELECTRIC DEVICE**

(30) Priority: 20.06.2023 CN 202310735567
(71) Applicant: Contemporary Amperex Technology Co., Limited, Ningde, Fujian 352100 (CN)
(72) Inventor: WU, Kai, Ningde, Fujian 352100 (CN); LIANG, Zibin, Ningde, Fujian 352100 (CN); WANG, Yuhao, Ningde, Fujian 352100 (CN); LIN, Wenguang, Ningde, Fujian 352100 (CN); LI, Qiang, Ningde, Fujian 352100 (CN); JIANG, Yao, Ningde, Fujian 352100 (CN); ZHANG, Xinxin, Ningde, Fujian 352100 (CN)
(74) Representative: Lorenz Seidler Gossel Part. mbB
(86) International application number: PCT/CN2023/127834
(87) International publication number: WO 2024/259843

(57) **Abstract**

A positive electrode active material, a preparation method thereof, a positive electrode plate, a battery, and an electric device are provided. The positive electrode active material includes a core and a coating layer. The core includes a sodium-ion transition metal oxide containing the iron element and/or nickel element. In the sodium-ion transition metal oxide, a molar amount of the iron element is denoted as b, a molar amount of the nickel is denoted as c, 0 ≤ b ≤ 0.4, and 0 ≤ c ≤ 0.4. The coating layer is disposed on at least a portion of a surface of the core, the coating layer contains an alkaline sodium compound, and based on a total mass of the positive electrode active material, a mass proportion of the alkaline sodium compound is w%, which satisfies: 0.1 ≤ (b + c)/w ≤ 0.5.

## Description

### TECHNICAL FIELD

This application pertains to the field of secondary battery technology, and specifically relates to a positive electrode active material, a preparation method thereof, a positive electrode plate, a battery, and an electric device.

### BACKGROUND

Secondary batteries, due to their notable characteristics such as light weight, no pollution, and no memory effect, are widely used in various consumer electronic products and electric vehicles.

Sodium-ion batteries are a type of secondary batteries, and layered transition metal oxides are commonly used positive electrode active materials for sodium-ion batteries. Under high voltages, layered transition metal oxides can allow intercalation and deintercalation of more sodium ions, resulting in a large specific capacity. However, existing layered transition metal oxides are structurally unstable under high voltages, leading to low cycling stability of batteries under high voltages.

### SUMMARY

In view of the technical problems existing in the background, this application provides a positive electrode active material aimed at addressing the issue of structural instability of positive electrode active materials under high voltages, thereby improving the cycling stability and energy density of batteries containing such materials under high voltages.

To achieve the above objective, a first aspect of this application provides a positive electrode active material, where the positive electrode active material includes:
a core, the core including a sodium-ion transition metal oxide containing the iron element and/or nickel element, where in the sodium-ion transition metal oxide, a molar amount of the iron element is denoted as b, a molar amount of the nickel is denoted as c, 0 ≤ b ≤ 0.4, and 0 ≤ c ≤ 0.4;
a coating layer, where the coating layer is disposed on at least a portion of a surface of the core, the coating layer contains an alkaline sodium compound, and based on a total mass of the positive electrode active material, a mass proportion of the alkaline sodium compound is w%, which satisfies: 0.1 ≤ (b + c)/w ≤ 0.5.

The positive electrode active material of this application is structurally stable under high voltages, thereby improving the cycling stability and energy density of batteries containing such materials under high voltages.

In some embodiments, 0.2 ≤ (b + c)/w ≤ 0.4. This can enhance the structural stability of the positive electrode active material under high voltages, thereby improving the cycling stability and energy density of batteries containing such materials under high voltages.

In some embodiments, the mass proportion of the alkaline sodium compound w% is 0.3wt%-5wt%, optionally 0.5wt%-2wt%. This can enhance the structural stability of the positive electrode active material under high voltages, thereby improving the cycling stability and energy density of batteries containing such materials under high voltages.

In some embodiments, the alkaline sodium compound includes at least one of sodium hydroxide and sodium carbonate, optionally sodium carbonate. This can enhance the structural stability of the positive electrode active material under high voltages, thereby improving the cycling stability and energy density of batteries containing such materials under high voltages.

In some embodiments, based on a total mass of the coating layer, a mass proportion of the sodium carbonate is greater than or equal to 80%. This can enhance the structural stability of the positive electrode active material under high voltages, thereby improving the cycling stability and energy density of batteries containing such materials under high voltages.

In some embodiments, based on the total mass of the coating layer, a mass proportion of the sodium hydroxide is less than or equal to 10%. This can enhance the structural stability of the positive electrode active material under high voltages, thereby improving the cycling stability and energy density of batteries containing such materials under high voltages.

In some embodiments, the sodium-ion transition metal oxide includes: NaₓMnₐFe_{b}Ni_{c}Q_{d}O_{2-e+δ}Fₑ, 0.5 ≤ x ≤ 1.2, 0 < a, 0 ≤ b ≤ 0.4, 0 ≤ c ≤ 0.4, 0 ≤ d, a + b + c + d = 1, 0 ≤ e ≤ 0.2, -0.1 ≤ δ ≤ 0.1, and Q includes at least one of Li, B, Mg, Al, Si, K, Ca, Ti, Co, Cu, Zn, Ga, Y, Zr, Nb, Mo, In, Sn, Sb, La, Ce, Ta, W, and Bi.

In some embodiments, the sodium-ion transition metal oxide includes: NaₓMnₐFe_{b}Ni_{c}Q_{d}O_{2-e+δ}Fₑ, 0.7 ≤ x ≤ 1.2, 0 < a, 0.1 ≤ b ≤ 0.4, 0.1 ≤ c ≤ 0.4, 0 ≤ d ≤ 0.3, a + b + c + d = 1, 0 ≤ e ≤ 0.2, -0.1 ≤ δ ≤ 0.1, and Q includes at least one of Li, B, Mg, Al, Si, K, Ca, Ti, Co, Cu, Zn, Ga, Y, Zr, Nb, Mo, In, Sn, Sb, La, Ce, Ta, W, and Bi, optionally at least one of B, Mg, Al, Si, Ca, Ti, Co, Cu, Zn, Zr, Nb, Mo, La, and Bi. Based on the total mass of the positive electrode active material, the mass proportion of the alkaline sodium compound is 1wt%-2wt%. This can enhance the structural stability of the positive electrode active material under high voltages, thereby improving the cycling stability and energy density of batteries containing such materials under high voltages.

In some embodiments, at least one of the following conditions is satisfied: 0.3 ≤ a ≤ 0.6; 0.15 ≤ b ≤ 0.35; 0.15 ≤ c ≤ 0.35; and 0.1 ≤ d ≤ 0.2.

In some embodiments, 0.5 ≤ (b + c)/a ≤ 2, optionally 0.5 ≤ (b + c)/a ≤ 1.5. This can enhance the structural stability of the positive electrode active material under high voltages, thereby improving the cycling stability and energy density of batteries containing such materials under high voltages.

In some embodiments, a phase of the sodium-ion transition metal oxide includes an O3 phase, a space group includes R3m, and an interlayer spacing is 0.53 nm-0.55 nm. This can increase the capacity of the battery.

In some embodiments, the sodium-ion transition metal oxide includes: NaₓMnₐNi_{c}Q_{d}O_{2-e+δ}Fₑ, 0.5 ≤ x ≤ 1.2, 0 < a, 0.1 ≤ c ≤ 0.3, 0 ≤ d ≤ 0.3, a + c + d = 1, 0 ≤ e ≤ 0.2, -0.1 ≤ δ ≤ 0.1, and Q includes at least one of Li, B, Mg, Al, Si, K, Ca, Ti, Co, Cu, Zn, Ga, Y, Zr, Nb, Mo, In, Sn, Sb, La, Ce, Ta, W, and Bi, optionally at least one of B, Mg, Al, Si, Ca, Ti, Co, Cu, Zn, Zr, Nb, Mo, La, and Bi. Based on the total mass of the positive electrode active material, a mass proportion of the alkaline sodium compound is 0.5wt%-1.5wt%. This can enhance the structural stability of the positive electrode active material under high voltages, thereby improving the cycling stability and energy density of batteries containing such materials under high voltages.

In some embodiments, at least one of the following conditions is satisfied: 0.5 ≤ a ≤ 0.8; 0.15 ≤ c ≤ 0.25; and 0.05 ≤ d ≤ 0.15.

In some embodiments, 0.125 ≤ c/a ≤ 0.45, optionally 0.2 ≤ c/a ≤ 0.3. This can enhance the structural stability of the positive electrode active material under high voltages, thereby improving the cycling stability and energy density of batteries containing such materials under high voltages.

In some embodiments, the phase of the sodium-ion transition metal oxide includes a P2 phase, the space group includes P63/mmc, and the interlayer spacing is 0.55 nm-0.57 nm. This can improve the rate performance and cycling stability of the battery.

In some embodiments, a BET specific surface area of the positive electrode active material is S m²/g, and S and w satisfy the relationship: 0.3 ≤ w/S ≤ 3, optionally 0.5 ≤ w/S ≤ 2. This can improve the cycling stability of the battery.

In some embodiments, the positive electrode active material satisfies at least one of the following conditions: Dᵥ50 of the positive electrode active material is 2 µm-20 µm, optionally 4 µm-15 µm; the BET specific surface area of the positive electrode active material is 0.2 m²/g-2 m²/g, optionally 0.3 m²/g-2 m²/g; and a compacted density of the positive electrode active material under a pressure of 300 MPa is 3.1 g/cm³-3.8 g/cm³, optionally 3.2 g/cm³-3.6 g/cm³.

Thus, when at least one of the Dᵥ50, specific surface area, and compacted density under the pressure of 300 MPa of the positive electrode active material is within the above ranges, a transport distance of Na ions within the positive electrode active material is short, and there are few surface side reactions, facilitating utilization of the gram capacity of the positive electrode active material, and improving the capacity retention rate of the battery containing such materials
A second aspect of this application provides a method for preparing the positive electrode active material described in the first aspect, including:
providing a sodium-ion transition metal oxide containing the iron element and/or nickel element, where in the sodium-ion transition metal oxide, a molar amount of the iron element is denoted as b, a molar amount of the nickel is denoted as c, 0 ≤ b ≤ 0.4, and 0 ≤ c ≤ 0.4; and
mixing and sintering the sodium-ion transition metal oxide with an alkaline sodium compound to obtain the positive electrode active material;
where based on a total mass of the positive electrode active material, a mass proportion of the alkaline sodium compound is w%, which satisfies: 0.1 ≤ (b + c)/w ≤ 0.5.

Thus, the above positive electrode active material with stable structure under high voltages can be prepared in this application, thereby improving the cycling stability and energy density of batteries containing such materials under high voltages.

A third aspect of this application provides a positive electrode plate including the positive electrode active material described in the first aspect or a positive electrode active material prepared by the method described in the second aspect.

A fourth aspect of this application provides a battery including the positive electrode plate described in the third aspect.

A fifth aspect of this application provides an electric device including the battery described in the fourth aspect.

Additional aspects and advantages of this application are in part provided in the following description, and some will become apparent from the following description or through the practice of this application.

### DESCRIPTION OF DRAWINGS

By reading the detailed description of the optional embodiments below, various other advantages and benefits will become clear to those of ordinary skill in the art. The drawings are only for the purpose of illustrating the optional embodiments and are not construed as limiting this application. Moreover, throughout the drawings, the same reference numerals denote the same components. In the drawings:
FIG. 1 is a cross-sectional view of a positive electrode active material according to an embodiment of this application;
FIG. 2 is a schematic structural diagram of a battery according to an embodiment of this application;
FIG. 3 is a schematic structural diagram of a battery module according to an embodiment of this application;
FIG. 4 is a schematic structural diagram of a battery pack according to an embodiment of this application;
FIG. 5 is an exploded view of FIG. 4;
FIG. 6 is a schematic diagram of an electric device using a battery as a power source according to an embodiment of this application;
FIG. 7 is a surface morphology image of a positive electrode active material prepared in Example 1;
FIG. 8 is a surface morphology image of a positive electrode active material prepared in Comparative Example 1;
FIG. 9 is a surface morphology image of a positive electrode active material disassembled from a button battery of Example 1 after 50 cycles; and
FIG. 10 is a surface morphology image of a positive electrode active material disassembled from a button battery of Comparative Example 1 after 50 cycles.

### Description of reference signs:

1000. positive electrode active material; 100. core; 200. coating layer; 1. secondary battery; 2. battery module; 3. battery pack; 4. upper box body; and 5. lower box body.

### DESCRIPTION OF EMBODIMENTS

The embodiments of the technical solutions of this application are described in detail below. The following embodiments are only used to illustrate the technical solutions of this application more clearly. Therefore, they are merely examples and are not intended to limit the protection scope of this application.

Reference to an "embodiment" herein means that a particular feature, structure, or characteristic described in connection with the embodiment may be included in at least one embodiment of this application. The appearance of the phrase in various places in the specification does not necessarily refer to the same embodiment, nor is it a separate or alternative embodiment mutually exclusive with other embodiments. Those skilled in the art explicitly and implicitly understand that the embodiments described herein may be combined with other embodiments.

For brevity, only some numerical ranges are specifically disclosed herein. However, any lower limit may be combined with any upper limit to form a range not explicitly stated, and any lower limit may be combined with any other lower limit to form a range not explicitly stated. Similarly, any upper limit may be combined with any other upper limit to form a range not explicitly stated. Furthermore, each individually disclosed point or single numerical value may serve as a lower limit or upper limit and be combined with any other point or single numerical value or with other lower limit or upper limit to form a range not explicitly stated.

In the description of the embodiments of this application, the term "and/or" merely describes an association relationship between associated objects, indicating that three relationships may exist, for example, A and/or B may represent: only A is present, A and B are both present, and only B is present. Additionally, the character "/" herein generally indicates an "or" relationship between the contextually associated objects.

Unless otherwise defined, all technical and scientific terms used herein have the same meaning as commonly understood by those skilled in the technical field of this application; the terms used herein are only for the purpose of describing specific embodiments and are not intended to limit this application; and the terms "include", "comprise", and any variations thereof in the specification, claims, and the above description of the drawings of this application are intended to cover non-exclusive inclusion.

Secondary batteries are not only used in energy storage power systems such as hydropower, thermal power, wind power, and solar power stations, but also widely used in electric transportation tools such as electric bicycles, electric motorcycles, and electric vehicles, as well as in the fields of military equipment, aerospace, and the like. Compared to traditional lithium-ion batteries, sodium-ion batteries have a significant advantage in price and have broad application prospects in large-scale energy storage systems.

Layered transition metal oxides, due to their high electrical conductivity, high energy density, large capacity, and long cycle life, are one of the popular positive electrode active materials for sodium-ion batteries. Under a high-voltage charging condition, more sodium ions are deintercalated from a layered transition metal oxide, resulting in a large specific capacity. However, this causes the oxygen in the layered transition metal oxide to become highly active, and the highly active oxygen can easily react with a metal in the transition metal oxide, causing metal migration to an electrolyte. Additionally, the highly active oxygen is likely to react with the electrolyte, which leads to metal dissolution and oxygen vacancies in the transition metal oxide and causes generation of cracks in the layered transition metal oxide, reducing the structural stability of the layered transition metal oxide, thereby resulting in low cycling stability of the battery under high voltages.

In this application, the positive electrode active material includes a core and a coating layer disposed on at least a portion of a surface of the core. The core includes a sodium-ion transition metal oxide containing the iron element and/or nickel element, where a molar amount of the iron element is denoted as b, a molar amount of the nickel is denoted as c, 0 ≤ b ≤ 0.4, and 0 ≤ c ≤ 0.4. Nickel and iron in the sodium-ion transition metal oxide are highly active and therefore can easily induce an increase in oxygen activity at a nearby oxygen site. Thus, by controlling a value of the molar amount b of the iron element and a value of the molar amount c of the nickel element within the above ranges, a percentage of highly active oxygen in the transition metal oxide can be reduced. Additionally, the coating layer contains an alkaline sodium compound, and based on a total mass of the positive electrode active material, a mass proportion of the alkaline sodium compound is w%. Moreover, in this application, the iron element and/or nickel element in the sodium-ion transition metal oxide of the core and the alkaline sodium compound in the coating layer satisfy: 0.1 ≤ (b + c)/w ≤ 0.5. The core and coating layer satisfying this composition can increase the specific capacity of the positive electrode active material while reducing the surface activity of the sodium-ion transition metal oxide. Furthermore, the coating layer can effectively avoid contact between the sodium-ion transition metal oxide and the electrolyte, reducing side reactions between the electrolyte and the surface of the transition metal oxide, reducing metal dissolution and oxygen vacancies, and improving the structural stability of the positive electrode active material under high voltages, thereby improving the cycling stability and energy density of batteries containing such materials under high voltages.

The positive electrode active material disclosed in the embodiments of this application is applicable to secondary batteries, and the battery disclosed in the embodiments of this application can be used in electric devices using batteries as power sources or used in various energy storage systems using batteries as energy storage units. The electric devices may include, but are not limited to, mobile phones, tablets, laptops, electric toys, electric tools, electric bicycles, ships, and spacecraft. The electric toys may include fixed or mobile electric toys, such as game consoles, electric toy cars, electric toy ships, and electric toy airplanes. The spacecraft may include airplanes, rockets, space shuttles, and spaceships.

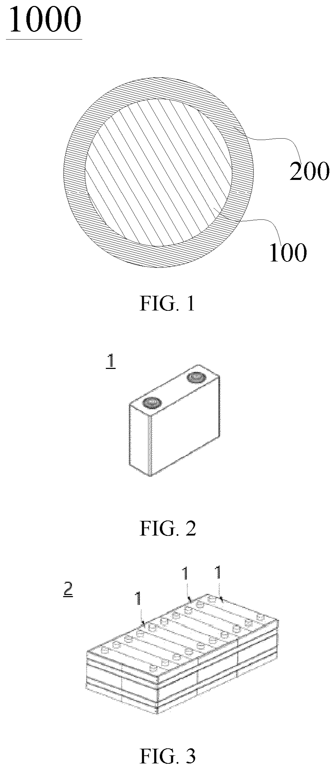

A first aspect of this application provides a positive electrode active material. Referring to FIG. 1, the positive electrode active material 1000 includes a core 100 and a coating layer 200. The core 100 includes a sodium-ion transition metal oxide containing the iron element and/or nickel element, where a molar amount of the iron element is denoted as b, a molar amount of the nickel element is denoted as c, 0 ≤ b ≤ 0.4, and 0 ≤ c ≤ 0.4. The coating layer 200 is disposed on at least a portion of a surface of the core 100, and the coating layer 200 contains an alkaline sodium compound. Based on a total mass of the positive electrode active material 1000, a mass proportion of the alkaline sodium compound is w%, which satisfies: 0.1 ≤ (b + c)/w ≤ 0.5.

The positive electrode active material 1000 of this application includes the core 100 and the coating layer 200 disposed on at least a portion of a surface of the core 100. The core 100 includes the sodium-ion transition metal oxide containing the iron element and/or nickel element, where the molar amount of the iron element is denoted as b, the molar amount of the nickel is denoted as c, 0 ≤ b ≤ 0.4, and 0 ≤ c ≤ 0.4. Nickel and iron in the sodium-ion transition metal oxide are highly active and therefore can easily induce an increase in oxygen activity at a nearby oxygen site. Thus, by controlling a value of the molar amount b of the iron element and a value of the molar amount c of the nickel element within the above ranges, a percentage of highly active oxygen in the transition metal oxide can be reduced. Additionally, the coating layer 200 contains an alkaline sodium compound, and based on a total mass of the positive electrode active material, a mass proportion of the alkaline sodium compound is w%. Moreover, in this application, the iron element and/or nickel element in the sodium-ion transition metal oxide of the core 100 and the alkaline sodium compound in the coating layer 200 satisfy: 0.1 ≤ (b + c)/w ≤ 0.5. The core 100 and coating layer 200 satisfying this composition can increase the specific capacity of the positive electrode active material 1000 while reducing the surface activity of the sodium-ion transition metal oxide. Furthermore, the coating layer 200 can effectively avoid contact between the sodium-ion transition metal oxide and the electrolyte, reducing side reactions between the electrolyte and the surface of the transition metal oxide, reducing metal dissolution and oxygen vacancies, and improving the structural stability of the positive electrode active material 1000 under high voltages, thereby improving the cycling stability and energy density of batteries containing such materials under high voltages.

In some embodiments of this application, the core 100 includes a sodium-ion transition metal oxide containing the iron element and/or nickel element, where a molar amount of the iron element is denoted as b, a molar amount of the nickel is denoted as c, 0 ≤ b ≤ 0.4, and 0 ≤ c ≤ 0.4. For example, 0.001 ≤ b ≤ 0.4, 0.005 ≤ b ≤ 0.4, 0.01 ≤ b ≤ 0.4, 0.015 ≤ b ≤ 0.4, 0.02 ≤ b ≤ 0.4, 0.05 ≤ b ≤ 0.4, 0.07 ≤ b ≤ 0.4, 0.1 ≤ b ≤ 0.4, 0.12 ≤ b ≤ 0.4, 0.15 ≤ b ≤ 0.4, 0.17 ≤ b ≤ 0.4, 0.2 ≤ b ≤ 0.4, 0.22 ≤ b ≤ 0.4, 0.25 ≤ b ≤ 0.4, 0.27 ≤ b ≤ 0.4, 0.3 ≤ b ≤ 0.4, 0.32 ≤ b ≤ 0.4, 0.35 ≤ b ≤ 0.4, or 0.37 ≤ b ≤ 0.4; and 0.001 ≤ c ≤ 0.4, 0.005 ≤ c ≤ 0.4, 0.01 ≤ c ≤ 0.4, 0.015 ≤ c ≤ 0.4, 0.02 ≤ c ≤ 0.4, 0.05 ≤ c ≤ 0.4, 0.07 ≤ c ≤ 0.4, 0.1 ≤ c ≤ 0.4, 0.12 ≤ c ≤ 0.4, 0.15 ≤ c ≤ 0.4, 0.17 ≤ c ≤ 0.4, 0.2 ≤ c ≤ 0.4, 0.22 ≤ c ≤ 0.4, 0.25 ≤ c ≤ 0.4, 0.27 ≤ c ≤ 0.4, 0.3 ≤ c ≤ 0.4, 0.32 ≤ c ≤ 0.4, 0.35 ≤ c ≤ 0.4, or 0.37 ≤ c ≤ 0.4. Specifically, nickel and iron in the sodium-ion transition metal oxide are highly active and therefore can easily induce an increase in oxygen activity at a nearby oxygen site. Thus, by controlling a value of the molar amount b of the iron element and a value of the molar amount c of the nickel element within the above ranges, a percentage of highly active oxygen in the transition metal oxide can be reduced, thereby reducing metal dissolution and oxygen vacancies, and improving the structural stability of the positive electrode active material 1000 under high voltages.

In some embodiments of this application, based on the total mass of the positive electrode active material 1000, a mass proportion of the alkaline sodium compound is w%, which satisfies: 0.1 ≤ (b + c)/w ≤ 0.5. For example, 0.15 ≤ (b + c)/w ≤ 0.45, 0.2 ≤ (b + c)/w ≤ 0.4, 0.25 ≤ (b + c)/w ≤ 0.35, or 0.25 ≤ (b + c)/w ≤ 0.3. In some other embodiments of this application, the mass proportion of the alkaline sodium compound is w%, which satisfies 0.2 ≤ (b + c)/w ≤ 0.4. Thus, the core 100 and coating layer 200 satisfying this composition can increase the specific capacity of the positive electrode active material 1000 while reducing the surface activity of the sodium-ion transition metal oxide. Furthermore, the coating layer 200 can effectively avoid contact between the sodium-ion transition metal oxide and the electrolyte, reducing side reactions between the electrolyte and the surface of the sodium-ion transition metal oxide, reducing metal dissolution and oxygen vacancies, and improving the structural stability of the positive electrode active material 1000 under high voltages, thereby improving the cycling stability and energy density of batteries containing such materials under high voltages.

In some embodiments of this application, the mass proportion of the alkaline sodium compound w% is 0.3wt%-5wt%, for example, 0.5wt%-4.5wt%, 0.8wt%-4.2wt%, 1wt%-4wt%, 1.2wt%-3.7wt%, 1.5wt%-3.5wt%, 1.8wt%-3.2wt%, 2wt%-3wt%, 2.2wt%-2.8wt%, or 2.5wt%-2.7wt%. In some other embodiments of this application, the mass proportion of the alkaline sodium compound w% is 0.5wt%-2wt%. Thus, the mass proportion of the alkaline sodium compound in the coating layer 200 of the positive electrode active material 1000 of this application satisfying the above range can effectively avoid contact between the sodium-ion transition metal oxide and the electrolyte, reducing side reactions between the electrolyte and the surface of the sodium-ion transition metal oxide, reducing metal dissolution and oxygen vacancies, and improving the structural stability of the positive electrode active material 1000 under high voltages, thereby improving the cycling stability and energy density of batteries containing such materials under high voltages.

In some embodiments of this application, the alkaline sodium compound includes at least one of sodium hydroxide and sodium carbonate. In some other embodiments of this application, the alkaline sodium compound includes sodium carbonate. Thus, the coating layer 200 containing the above alkaline sodium compound can effectively avoid contact between the sodium-ion transition metal oxide and the electrolyte, reducing side reactions between the electrolyte and the surface of the sodium-ion transition metal oxide, reducing metal dissolution and oxygen vacancies, and improving the structural stability of the positive electrode active material 1000 under high voltages, thereby improving the cycling stability and energy density of batteries containing such materials under high voltages.

In some embodiments of this application, based on a total mass of the coating layer 200, a mass proportion of the sodium carbonate is greater than or equal to 80%, for example, 80%-100%, 82%-98%, 85%-95%, 87%-92%, or 90%-92%. Thus, when the coating layer 200 contains the sodium carbonate at the above percentage, the sodium carbonate is distributed uniformly on the surface of the core 100, and the coating layer 200 formed through transformation is more uniform, effectively avoiding contact between the sodium-ion transition metal oxide and the electrolyte, reducing side reactions between the electrolyte and the surface of the sodium-ion transition metal oxide, reducing metal dissolution and oxygen vacancies, and improving the structural stability of the positive electrode active material 1000 under high voltages, thereby improving the cycling stability and energy density of batteries containing such materials under high voltages.

In some embodiments of this application, based on the total mass of the coating layer 200, a mass proportion of the sodium hydroxide is less than or equal to 10%, for example, 9%-10%, 8%-8.5%, 7%-7.8%, 6%-6.8%, 5%-5.8%, 4%-4.8%, 3%-3.8%, 2%-2.8%, 1%-1.8%, or 0%-1%. Specifically, the sodium hydroxide in the coating layer 200 is prone to side reactions with a binder in a positive electrode slurry, causing severe gelation of the slurry. Additionally, during the formation of the coating layer 200 through transformation, the sodium hydroxide is likely to generate water molecules, and the water molecules react with lithium hexafluorophosphate in the electrolyte of the battery to form HF, thereby reducing the cycling stability of the battery. Thus, the mass proportion of the sodium hydroxide in the coating layer 200 being within the above range can reduce gelation of the positive electrode slurry as well as improve the cycling stability of the battery containing such materials under high voltages.

In some embodiments of this application, the sodium-ion transition metal oxide in the core 100 includes:
NaₓMnₐFe_{b}Ni_{c}Q_{d}O_{2-e+δ}Fₑ, where
0.5 ≤ x ≤ 1.2, 0 < a, 0 ≤ b ≤ 0.4, 0 ≤ c ≤ 0.4, 0 ≤ d, a + b + c + d = 1, 0 ≤ e ≤ 0.2, -0.1 ≤ δ ≤ 0.1, and Q includes at least one of Li, B, Mg, Al, Si, K, Ca, Ti, Co, Cu, Zn, Ga, Y, Zr, Nb, Mo, In, Sn, Sb, La, Ce, Ta, W, and Bi.

In some specific embodiments of this application, the sodium-ion transition metal oxide in the core 100 includes: NaₓMnₐFe_{b}Ni_{c}Q_{d}O_{2-e+δ}Fₑ, where
0.7 ≤ x ≤ 1.2, 0 < a, 0.1 ≤ b ≤ 0.4, 0.1 ≤ c ≤ 0.4, 0 ≤ d ≤ 0.3, a + b + c + d = 1, 0 ≤ e ≤ 0.2, -0.1 ≤ δ ≤ 0.1, and Q includes at least one of Li, B, Mg, Al, Si, K, Ca, Ti, Co, Cu, Zn, Ga, Y, Zr, Nb, Mo, In, Sn, Sb, La, Ce, Ta, W, and Bi, optionally at least one of B, Mg, Al, Si, Ca, Ti, Co, Cu, Zn, Zr, Nb, Mo, La, and Bi, where based on the total mass of the positive electrode active material 1000, the mass proportion of the alkaline sodium compound is 1wt%-2wt%, for example, 1.2wt%-2wt%, 1.5wt%-2wt%, or 1.8wt%-2wt%. Thus, the mass proportion of the alkaline sodium compound in the coating layer 200 on the surface of the sodium-ion transition metal oxide core 100 satisfying the above range can effectively avoid contact between the sodium-ion transition metal oxide and the electrolyte, reducing side reactions between the electrolyte and the surface of the sodium-ion transition metal oxide, reducing metal dissolution and oxygen vacancies, and improving the structural stability of the positive electrode active material 1000 under high voltages, thereby improving the cycling stability and energy density of batteries containing such materials under high voltages.

In some embodiments of this application, in the sodium-ion transition metal oxide NaₓMnₐFe_{b}Ni_{c}Q_{d}O_{2-e+δ}Fₑ, x may satisfy 0.7 ≤ x ≤ 1.2, for example, 0.7 ≤ x ≤ 1.1, 0.8 ≤ x ≤ 1, 0.85 ≤ x ≤ 1, 0.88 ≤ x ≤ 1, 0.9 ≤ x ≤ 1, 0.95 ≤ x ≤ 1, or 0.98 ≤ x ≤ 1. Thus, the sodium-ion transition metal oxide containing the sodium at this percentage enables the battery to have a large capacity.

It should be noted that in the positive electrode plate, battery, or electric device, since the battery undergoes processes such as formation and cycling, sodium ions may be consumed, and thus there may be a situation that a measured percentage x of the sodium element in the sodium-ion transition metal oxide is less than 1. Additionally, if a sodium supplement agent is used in the positive electrode plate and negative electrode plate, the measured percentage x of the sodium element in the sodium-ion transition metal oxide may be greater than 1 after the processes such as formation and cycling of the battery.

In some embodiments of this application, in the sodium-ion transition metal oxide NaₓMnₐFe_{b}Ni_{c}Q_{d}O_{2-e+δ}Fₑ, a may satisfy a > 0, for example, 0.001 ≤ a < 1, 0.005 ≤ a ≤ 0.9, 0.1 ≤ a ≤ 0.8, 0.2 ≤ a ≤ 0.7, 0.3 ≤ a ≤ 0.6, or 0.4 ≤ a ≤ 0.5. Thus, the sodium-ion transition metal oxide containing manganese at this percentage can effectively improve the structural stability of the sodium-ion transition metal oxide, and improve the cycling stability of the battery containing such materials. In some other embodiments of this application, in the sodium-ion transition metal oxide NaₓMnₐFe_{b}Ni_{c}Q_{d}O_{2-e+δ}Fₑ, a may satisfy 0.3 ≤ a ≤ 0.6.

In some embodiments of this application, in the sodium-ion transition metal oxide NaₓMnₐFe_{b}Ni_{c}Q_{d}O_{2-e+δ}Fₑ, b may satisfy 0.1 ≤ b ≤ 0.4, for example, 0.1 ≤ b ≤ 0.35, 0.15 ≤ b ≤ 0.3, 0.2 ≤ b ≤ 0.25, or 0.22 ≤ b ≤ 0.25. Thus, the sodium-ion transition metal oxide NaₓMnₐFe_{b}Ni_{c}Q_{d}O_{2-e+δ}Fₑ containing Fe at this percentage not only reduces the percentage of highly active oxygen in the sodium-ion transition metal oxide but also increases the specific capacity of the positive electrode active material 1000. In some other embodiments of this application, in the sodium-ion transition metal oxide NaₓMnₐFe_{b}Ni_{c}Q_{d}O_{2-e+δ}Fₑ, b may be 0.15 ≤ b ≤ 0.35.

In some embodiments of this application, in the sodium-ion transition metal oxide NaₓMnₐFe_{b}Ni_{c}Q_{d}O_{2-e+δ}Fₑ, c may satisfy 0.1 ≤ c ≤ 0.40, for example, 0.1 ≤ c ≤ 0.35, 0.15 ≤ c ≤ 0.3, 0.2 ≤ c ≤ 0.25, or 0.22 ≤ c ≤ 0.25. Thus, the sodium-ion transition metal oxide NaₓMnₐFe_{b}Ni_{c}Q_{d}O_{2-e+δ}Fₑ containing Ni at this percentage not only reduces the percentage of highly active oxygen in the sodium-ion transition metal oxide but also increases the specific capacity of the positive electrode active material 1000. In some other embodiments of this application, in the sodium-ion transition metal oxide NaₓMnₐFe_{b}Ni_{c}Q_{d}O_{2-e+δ}Fₑ, c may be 0.15 ≤ c ≤ 0.35.

In some embodiments of this application, in the sodium-ion transition metal oxide NaₓMnₐFe_{b}Ni_{c}Q_{d}O_{2-e+δ}Fₑ, Q includes at least one of Li, B, Mg, Al, Si, K, Ca, Ti, Co, Cu, Zn, Ga, Y, Zr, Nb, Mo, In, Sn, Sb, La, Ce, Ta, W, and Bi. In some other embodiments of this application, in the sodium-ion transition metal oxide NaₓMnₐFe_{b}Ni_{c}Q_{d}O_{2-e+δ}Fₑ, Q includes at least one of B, Mg, Al, Si, Ca, Ti, Co, Cu, Zn, Zr, Nb, Mo, La, and Bi.

In some embodiments of this application, in the sodium-ion transition metal oxide NaₓMnₐFe_{b}Ni_{c}Q_{d}O_{2-e+δ}Fₑ, d may satisfy 0 ≤ d ≤ 0.3, for example, 0.001 ≤ d ≤ 0.3, 0.005 ≤ d ≤ 0.3, 0.01 ≤ d ≤ 0.3, 0.05 ≤ d ≤ 0.3, 0.1 ≤ d ≤ 0.3, 0.15 ≤ d ≤ 0.3, 0.17 ≤ d ≤ 0.27, 0.2 ≤ d ≤ 0.25, or 0.2 ≤ d ≤ 0.22. Thus, the sodium-ion transition metal oxide NaₓMnₐFe_{b}Ni_{c}Q_{d}O_{2-e+δ}Fₑ containing the Q element at this percentage can improve the structural stability of the positive electrode active material 1000. In some other embodiments of this application, in the sodium-ion transition metal oxide NaₓMnₐFe_{b}Ni_{c}Q_{d}O_{2-e+δ}Fₑ, d may be 0.1 ≤ d ≤ 0.2.

In some embodiments of this application, in the sodium-ion transition metal oxide NaₓMnₐFe_{b}Ni_{c}Q_{d}O_{2-e+δ}Fₑ, a value of δ satisfies -0.1 ≤ δ ≤ 0.1, and a value of e satisfies 0 ≤ e ≤ 0.2. For example, -0.09 ≤ δ ≤ 0.09, -0.08 ≤ δ ≤ 0.08, -0.07 ≤ δ ≤ 0.07, -0.06 ≤ δ ≤ 0.06, -0.05 ≤ δ ≤ 0.05, -0.04 ≤ δ ≤ 0.04, -0.03 ≤ δ ≤ 0.03, -0.02 ≤ δ ≤ 0.02, -0.01 ≤ δ ≤ 0.01, -0.01 ≤ δ ≤ 0, or 0 ≤ δ ≤ 0.01, and 0.01 ≤ e ≤ 0.2, 0.02 ≤ e ≤ 0.18, 0.05 ≤ e ≤ 0.15, 0.08 ≤ e ≤ 0.12, or 0.1 ≤ e ≤ 0.12.

Specifically, doping an oxygen site in the sodium-ion transition metal oxide NaₓMnₐFe_{b}Ni_{c}Q_{d}O_{2-e+δ}Fₑ of this application with F at this percentage can effectively stabilize the oxygen in the sodium-ion transition metal oxide, reducing structural damage caused by oxygen release from lattice of the sodium-ion transition metal oxide, and improving the stability of the positive electrode active material 1000, thereby improving the cycling stability of the battery.

It should be noted that in the positive electrode plate, battery, or electric device, since the battery undergoes processes such as cycling, there may be a loss of oxygen in the sodium-ion transition metal oxide, resulting in a situation that a measured percentage 2 + δ - e of the oxygen element in the sodium-ion transition metal oxide is less than 2.

In some embodiments of this application, in the sodium-ion transition metal oxide NaₓMnₐFe_{b}Ni_{c}Q_{d}O_{2-e+δ}Fₑ, 0.5 ≤ (b + c)/a ≤ 2, for example, 0.8 ≤ (b + c)/a ≤ 2, 1 ≤ (b + c)/a ≤ 1.8, 1.2 ≤ (b + c)/a ≤ 1.6, or 1.5 ≤ (b + c)/a ≤ 1.6. In some other embodiments of this application, in the sodium-ion transition metal oxide NaₓMnₐFe_{b}Ni_{c}Q_{d}O_{2-e+δ}Fₑ, 0.5 ≤ (b + c)/a ≤ 1.5. Specifically, Ni contributes to capacity, but Fe and Ni valence changes are likely to cause structural instability, while Mn can stabilize the structure of the sodium-ion transition metal oxide. Thus, the molar amount a of Mn, the molar amount b of Fe, and the molar amount c of Ni in the sodium-ion transition metal oxide of this application satisfying the above relationship can increase the specific capacity of the sodium-ion transition metal oxide as well as improve the structural stability of the sodium-ion transition metal oxide under high voltages, thereby improving the cycling stability and energy density of batteries containing such materials under high voltages.

In some embodiments of this application, a phase of the sodium-ion transition metal oxide NaₓMnₐFe_{b}Ni_{c}QaO_{2-e+δ}Fₑ includes an O3 phase, a space group includes R3m, and an interlayer spacing is 0.53 nm-0.55 nm. For example, the interlayer spacing may be 0.532 nm-0.55 nm, 0.535 nm-0.548 nm, 0.537 nm-0.545 nm, or 0.540 nm-0.542 nm. Specifically, the sodium-ion transition metal oxide forming the O3 phase contains a large percentage of Na, enabling a large capacity of the battery.

It should be noted that the phase, space group, and interlayer spacing of the sodium-ion transition metal oxide NaₓMnₐFe_{b}Ni_{c}Q_{d}O_{2-e+δ}Fₑ in this application can be characterized using X-ray diffraction methods.

Specifically, a method for testing an interlayer spacing d₀₀₃ of a 003 crystal plane and a space group of the sodium-ion transition metal oxide NaₓMnₐFe_{b}Ni_{c}Q_{d}O_{2-e+δ}Fₑ includes: in a dry room or glovebox, grinding a to-be-tested sample in an agate mortar; making the sample pass through a 350-mesh sieve; taking an appropriate amount of the sieved sample; placing the sieved sample in the center of a groove of a sample holder to ensure that the loose sample powder is slightly higher than the plane of the sample holder; lightly pressing a surface of the sample with a glass slide so that the surface of the sample is leveled to be flush with the plane of the holder; scraping off excess powder; after sample preparation, using a Bruker D8A_A25 X-ray powder diffractometer from Bruker AxS in Germany for testing, where CuK_{α} rays are used as a radiation source, a ray wavelength λ = 1.5406 Å, a 20 scanning angle range is 5°-60°, and a scanning rate is 4°/min for testing; and after testing, obtaining the interlayer spacing d₀₀₃ of the 003 crystal plane based on an angle corresponding to the 003 crystal plane, the Bragg equation 2d•sinθ = λ, and each unit cell of the 003 crystal plane including three transition metal layers, where the space group and crystal phase of the sample can be confirmed by comparing an XRD diffraction peaks of the sample with a standard card in XRD analysis software.

In still some other specific embodiments of this application, the sodium-ion transition metal oxide in the core 100 includes:
NaₓMnₐNi_{c}Q_{d}O_{2-e+δ}Fₑ, where
0.5 ≤ x ≤ 1.2, 0< a, 0.1 ≤ c ≤ 0.3, 0 ≤ d ≤ 0.3, a + c + d = 1, 0 ≤ e ≤ 0.2, -0.1 ≤ δ ≤ 0.1, and Q includes at least one of Li, B, Mg, Al, Si, K, Ca, Ti, Co, Cu, Zn, Ga, Y, Zr, Nb, Mo, In, Sn, Sb, La, Ce, Ta, W, and Bi, optionally at least one of B, Mg, Al, Si, Ca, Ti, Co, Cu, Zn, Zr, Nb, Mo, La, and Bi, where based on the total mass of the positive electrode active material 1000, the mass proportion of the alkaline sodium compound is 0.5wt%-1.5wt%, for example, 0.5wt%-1.3wt%, 0.7wt%-1wt%, or 0.9wt%-1wt%. Thus, the mass proportion of the alkaline sodium compound in the coating layer 200 on the surface of the sodium-ion transition metal oxide in the core 100 satisfying the above range can effectively avoid contact between the sodium-ion transition metal oxide and the electrolyte, reducing side reactions between the electrolyte and the surface of the sodium-ion transition metal oxide, reducing metal dissolution and oxygen vacancies, and improving the structural stability of the positive electrode active material 1000, thereby improving the cycling stability and energy density of batteries containing such materials under high voltages.

In some embodiments of this application, in the sodium-ion transition metal oxide NaₓMnₐNi_{c}Q_{d}O_{2-e+δ}Fₑ, x may satisfy 0.5 ≤ x ≤ 1.2, for example, 0.5 ≤ x ≤ 1.1, 0.6 ≤ x ≤ 1.1, 0.8 ≤ x ≤ 1, 0.85 ≤ x ≤ 1, 0.88 ≤ x ≤ 1, 0.9 ≤ x ≤ 1, 0.95 ≤ x ≤ 1, or 0.98 ≤ x ≤ 1. Thus, the sodium-ion transition metal oxide containing the sodium element at this percentage enables the battery to have a large capacity.

It should be noted that in the positive electrode plate, battery, or electric device, since the battery undergoes processes such as formation and cycling, sodium ions may be consumed, resulting in a situation that a measured percentage x of the sodium element in the sodium-ion transition metal oxide is less than 1. Additionally, if a sodium supplement agent is used in the positive electrode plate and negative electrode plate, the measured percentage x of the sodium element in the sodium-ion transition metal oxide may be greater than 1 after the processes such as formation and cycling of the battery.

In some embodiments of this application, in the sodium-ion transition metal oxide NaₓMnₐNi_{c}Q_{d}O_{2-e+δ}Fₑ, a may satisfy a > 0, for example, 0.001 ≤ a < 1, 0.005 ≤ a ≤ 0.9, 0.1 ≤ a ≤ 0.8, 0.2 ≤ a ≤ 0.7, 0.3 ≤ a ≤ 0.6, or 0.4 ≤ a ≤ 0.5. Thus, the sodium-ion transition metal oxide containing manganese at this percentage can effectively improve the structural stability of the sodium-ion transition metal oxide, improving the cycling stability of the battery containing such materials. In some other embodiments of this application, in the sodium-ion transition metal oxide NaₓMnₐNi_{c}Q_{d}O_{2-e+δ}Fₑ, a may satisfy 0.5 ≤ a ≤ 0.8.

In some embodiments of this application, in the sodium-ion transition metal oxide NaₓMnₐNi_{c}Q_{d}O_{2-e+δ}Fₑ, c satisfies 0.1 ≤ c ≤ 0.3, for example, 0.15 ≤ c ≤ 0.3, 0.2 ≤ c ≤ 0.25, or 0.22 ≤ c ≤ 0.25. Thus, the sodium-ion transition metal oxide NaₓMnₐFe_{b}Ni_{c}Q_{d}O_{2-e+δ}Fₑ containing Ni at this percentage not only reduces the percentage of highly active oxygen in the sodium-ion transition metal oxide but also increases the specific capacity of the positive electrode active material 1000. In some other embodiments of this application, in the sodium-ion transition metal oxide NaₓMnₐNi_{c}Q_{d}O_{2-e+δ}Fₑ, c satisfies 0.15 ≤ c ≤ 0.25.

In some embodiments of this application, in the sodium-ion transition metal oxide NaₓMnₐNi_{c}Q_{d}O_{2-e+δ}Fₑ, Q includes at least one of Li, B, Mg, Al, Si, K, Ca, Ti, Co, Cu, Zn, Ga, Y, Zr, Nb, Mo, In, Sn, Sb, La, Ce, Ta, W, and Bi. In some other embodiments of this application, in the sodium-ion transition metal oxide NaₓMnₐNi_{c}Q_{d}O_{2-e+δ}Fₑ, Q includes at least one of B, Mg, Al, Si, Ca, Ti, Co, Cu, Zn, Zr, Nb, Mo, La, and Bi.

In some embodiments of this application, in the sodium-ion transition metal oxide NaₓMnₐNi_{c}Q_{d}O_{2-e+δ}Fₑ, d satisfies 0 ≤ d ≤ 0.3, for example, 0.001 ≤ d ≤ 0.3, 0.005 ≤ d ≤ 0.3, 0.01 ≤ d ≤ 0.3, 0.05 ≤ d ≤ 0.3, 0.1 ≤ d ≤ 0.3, 0.15 ≤ d ≤ 0.3, 0.17 ≤ d ≤ 0.27, 0.2 ≤ d ≤ 0.25, or 0.2 ≤ d ≤ 0.22. Thus, the sodium-ion transition metal oxide NaₓMnₐNi_{c}Q_{d}O_{2-e+δ}Fₑ containing the Q element at this percentage can improve the structural stability of the positive electrode active material 1000. In some other embodiments of this application, in the sodium-ion transition metal oxide NaₓMnₐNi_{c}Q_{d}O_{2-e+δ}Fₑ, d satisfies 0.05 ≤ d ≤ 0.15.

In some embodiments of this application, in the sodium-ion transition metal oxide NaₓMnₐNi_{c}Q_{d}O_{2-c+δ}Fₑ, a value of δ satisfies -0.1 ≤ δ ≤ 0.1, and a value of e satisfies 0 ≤ e ≤ 0.2. For example, -0.09 ≤ δ ≤ 0.09, -0.08 ≤ δ ≤ 0.08, -0.07 ≤ δ ≤ 0.07, -0.06 ≤ δ ≤ 0.06, -0.05 ≤ δ ≤ 0.05, -0.04 ≤ δ ≤ 0.04, -0.03 ≤ δ ≤ 0.03, -0.02 ≤ δ ≤ 0.02, -0.01 ≤ δ ≤ 0.01, -0.01 ≤ δ ≤ 0, or 0 ≤ δ ≤ 0.01; and 0.01 ≤ e ≤ 0.2, 0.02 ≤ e ≤ 0.18, 0.05 ≤ e ≤ 0.15, 0.08 ≤ e ≤ 0.12, or 0.1 ≤ e ≤ 0.12.

Specifically, doping an oxygen site in the sodium-ion transition metal oxide NaₓMnₐNi_{c}Q_{d}O_{2-e+δ}Fₑ of this application with F at this percentage can effectively stabilize the oxygen in the sodium-ion transition metal oxide, reducing structural damage caused by oxygen release from lattice of the sodium-ion transition metal oxide, and improving the stability of the positive electrode active material 1000, thereby improving the cycling stability of the battery.

It should be noted that in the positive electrode plate, battery, or electric device, since the battery undergoes processes such as cycling, there may be a loss of oxygen in the sodium-ion transition metal oxide, resulting in a situation that a measured percentage 2 + δ - e of the oxygen element in the sodium-ion transition metal oxide is less than 2.

In some embodiments of this application, in the sodium-ion transition metal oxide NaₓMnₐNi_{c}Q_{d}O_{2-e+δ}Fₑ, 0.125 ≤ c/a ≤ 0.45, for example, 0.15 ≤ c/a ≤ 0.45, 0.175 ≤ c/a ≤ 0.425, 0.2 ≤ c/a ≤ 0.4, 0.225 ≤ c/a ≤ 0.375, 0.25 ≤ c/a ≤ 0.35, 0.275 ≤ c/a ≤ 0.325, or 0.3 ≤ c/a ≤ 0.325. In some other embodiments of this application, in the sodium-ion transition metal oxide NaₓMnₐNi_{c}Q_{d}O_{2-e+δ}Fₑ, 0.2 ≤ c/a ≤ 0.3. Specifically, Ni contributes to capacity, but Ni valence changes are likely to cause structural instability, while Mn can stabilize the structure of the sodium-ion transition metal oxide. Thus, the molar amount a of Mn and the molar amount c of Ni in the sodium-ion transition metal oxide satisfying the above relationship can increase the specific capacity of the sodium-ion transition metal oxide as well as improve the structural stability of the sodium-ion transition metal oxide under high voltages, thereby improving the cycling stability and energy density of batteries containing such materials under high voltages.

In some embodiments of this application, the phase of the sodium-ion transition metal oxide NaₓMnₐNi_{c}Q_{d}O_{2-e+δ}Fₑ includes a P2 phase, the space group includes P63/mmc, and the interlayer spacing is 0.55 nm-0.57 nm. For example, the interlayer spacing may be 0.552 nm-0.57 nm, 0.555 nm-0.568 nm, 0.557 nm-0.565 nm, or 0.56 nm-0.562 nm. Specifically, the sodium-ion transition metal oxide forming the P2 phase has a large interlayer spacing, enabling a higher Na ion transport rate and maintaining the integrity of a layered structure, thereby enabling the battery to have excellent rate performance and cycling performance.

It should be noted that the phase, space group, and interlayer spacing of the sodium-ion transition metal oxide NaₓMnₐNi_{c}Q_{d}O_{2-e+δ}Fₑ in this application can be characterized using X-ray diffraction methods.

Specifically, a method for testing an interlayer spacing d₀₀₃ of the 003 crystal plane and the space group of the sodium-ion transition metal oxide NaₓMnₐNi_{c}Q_{d}O_{2-e+δ}Fₑ includes: in a dry room or glovebox, grinding a to-be-tested sample in an agate mortar; making the sample pass through a 350-mesh sieve; taking an appropriate amount of the sieved sample; placing the sieved sample in the center of a groove in a sample holder to ensure that the loose sample powder is slightly higher than the plane of the sample holder; lightly pressing the surface of the sample with a glass slide so that the surface of the sample is leveled to be flush with the plane of the holder; scraping off excess powder; after sample preparation, using a Bruker D8A_A25 X-ray powder diffractometer from Bruker AxS in Germany for testing, where CuK_{α} rays are used as a radiation source, a ray wavelength λ = 1.5406 Å, a 20 scanning angle range is 5°-60°, and a scanning rate is 4°/min for testing; and after testing, obtaining the interlayer spacing d₀₀₃ of the 003 crystal plane based on an angle corresponding to the 003 crystal plane, the Bragg equation 2d•sinθ = λ, and each unit cell of the 003 crystal plane including three transition metal layers, where space group and crystal phase of the sample are confirmed by comparing an XRD diffraction peak of the sample with a standard card in XRD analysis software.

In some embodiments of this application, a BET specific surface area of the positive electrode active material 1000 is S m²/g, and S and w satisfy the relationship: 0.3 ≤ w/S ≤ 3, for example, 0.5 ≤ w/S ≤ 2.8, 0.7 ≤ w/S ≤ 2.5, 1 ≤ w/S ≤ 2.2, 1.3 ≤ w/S ≤ 2, or 1.5 ≤ w/S ≤ 1.8. In some other embodiments of this application, in the positive electrode active material 1000, S and w satisfy the relationship: 0.5 ≤ w/S ≤ 2. Thus, S and w in the positive electrode active material 1000 of this application satisfying the above relationship can increase the specific capacity of the positive electrode active material as well as effectively avoid contact between the sodium-ion transition metal oxide and the electrolyte, reducing side reactions between the electrolyte and the surface of the transition metal oxide, reducing metal dissolution and oxygen vacancies, and improving the structural stability of the positive electrode active material 1000, thereby improving the cycling stability and energy density of batteries containing such materials under high voltages.

In some embodiments of this application, Dᵥ50 of the positive electrode active material 1000 is 2 µm-20 µm. For example, the Dᵥ50 of the positive electrode active material may be 2 µm-19 µm, 4 µm-18 µm, 5 µm-15 µm, 6 µm-14 µm, 8 µm-13 µm, 9 µm-12 µm, 10 µm-11 µm, or the like. In some other embodiments of this application, the Dᵥ50 of the positive electrode active material 1000 is 4 µm-15 µm.

In this application, Dᵥ50 refers to a particle size corresponding to a cumulative volume distribution percentage of 50%. For example, measurement is performed using a laser particle size analyzer (for example, Malvern Master Size 3000) in accordance with standard GB/T 19077-2016.

In some embodiments of this application, the BET specific surface area of the positive electrode active material 1000 is 0.2 m²/g-2 m²/g. For example, the specific surface area of the positive electrode active material may be 0.2 m²/g-1.5 m²/g, 0.2 m²/g-1 m²/g, 0.3 m²/g-0.8 m²/g, 0.3 m²/g-0.5 m²/g, or the like. In some other embodiments of this application, the specific surface area of the positive electrode active material 1000 is 0.3 m²/g-2 m²/g.

In this application, the BET specific surface area of the positive electrode active material 1000 has a meaning well known in the art and can be measured using instruments and methods well known in the art. For example, the BET specific surface area is measured using the following test method: using a Micromeritics Gemini VII 2390 multi-station automatic surface area and pore analyzer, placing approximately 7 g of a sample in a 9 cc long tube with a bulb, performing degassing at 200°C for 2 h, and then performing a test in a main unit to obtain BET specific surface area data of the positive electrode active material 1000.

In some embodiments of this application, a compacted density of the positive electrode active material 1000 under a pressure of 300 MPa is 3.1 g/cm³-3.8 g/cm³. For example, the compacted density of the positive electrode active material 1000 under the pressure of 300 MPa may be 3.0 g/cm³-3.8 g/cm³, 3.2 g/cm³-3.5 g/cm³, 3.2 g/cm³-3.4 g/cm³, or the like. In some embodiments of this application, the compacted density of the positive electrode active material 1000 under the pressure of 300 MPa is 3.2 g/cm³-3.6 g/cm³.

In this application, "compacted density" has a meaning well known in the art and can be measured using instruments and methods well known in the art. For example, the compacted density is measured using the following test method: placing a quantitative mass m of powder in a dedicated compaction mold; placing the mold on a compacted density instrument; setting a pressure of 300 MPa; measuring a thickness-based volume v of the powder under a pressure of 300 MPa on the instrument; and calculating the compacted density as according to density = mass m / volume v (reference is specifically made to GB/T 24533-2009).

Specifically, when at least one of the Dᵥ50, specific surface area, and compacted density under the pressure of 300 MPa of the positive electrode active material 1000 of this application is within the above ranges, a transport distance within the positive electrode active material 1000 is short and surface side reactions are reduced, promoting the utilization of the gram capacity of the positive electrode active material, and increasing the capacity retention rate of batteries containing such materials.

In this application, the elemental composition of the positive electrode active material 1000 can be determined using instruments and methods well known in the art. For example, the elemental composition is tested using inductively coupled plasma emission spectroscopy, where for instrument standards, reference is made to EPA6010D-2014 Inductively Coupled Plasma Atomic Emission Spectroscopy. A sample is chemically processed and digested into a solution, atomized into plasma to excite characteristic spectral lines of elements, and the wavelength and intensity of the spectral lines (proportional to concentration) are used for qualitative and quantitative analysis of element percentages.

A percentage of the alkaline sodium compound Na₂CO₃ in the coating layer 200 of the positive electrode active material 1000 can be measured using instruments and methods well known in the art. For example, the percentage is tested in accordance with the GB/T 9736-2008 standard. In a carbon dioxide-removed atmosphere, 30 g of the obtained positive electrode active material powder is weighed, added with 100 ml pure water, stirred for 30 min, left standing for 10 min, and filtered, and then a certain amount of filtrate is taken. A 0.05 mol/L hydrochloric acid standard solution is used for titration, with the used instrument being a Mettler T5 titrator.

A percentage of the alkaline sodium compound NaOH in the coating layer 200 of the positive electrode active material 1000 can be measured using instruments and methods well known in the art. For example, the percentage is tested in accordance with the GB/T 9736-2008 standard. In a carbon dioxide-removed and dehumidified atmosphere, 30 g of the obtained layered oxide powder is weighed, added with 100 ml anhydrous ethanol, stirred for 30 min, left standing for 10 min, and filtered; and then 10 mL filtrate is taken, diluted with 50 mL ultrapure water, and then titrated with a 0.05 mol/L hydrochloric acid standard solution, with the used instrument being a Mettler T5 titrator.

A percentage of the sodium element in the composition of the sodium-ion transition metal oxide in the core 100 of this application can be calculated by subtracting a total percentage of the alkaline sodium compounds NaOH and Na₂CO₃ in the coating layer which is obtained using the above test methods from a total percentage of the sodium element which is obtained using the above inductively coupled plasma emission spectroscopy. Percentages of other elements in the composition of the sodium-ion transition metal oxide can be obtained using the above inductively coupled plasma emission spectroscopy. In this way, the composition of the sodium-ion transition metal oxide can be obtained. The mass proportion w% of the alkaline sodium compound in the positive electrode active material 1000 can be obtained by summing the percentages of the alkaline sodium compounds NaOH and Na₂CO₃ in the coating layer.

A second aspect of this application provides a method for preparing the positive electrode active material described in the first aspect, including the following steps.

S100: Provide a sodium-ion transition metal oxide containing iron element and/or nickel element.

In some embodiments of this application, in the sodium-ion transition metal oxide, a molar amount of the iron element is denoted as b, a molar amount of the nickel is denoted as c, 0 ≤ b ≤ 0.4, and 0 ≤ c ≤ 0.4.

In this application, the sodium-ion transition metal oxide may include: NaₓMnₐFe_{b}Ni_{c}Q_{d}O_{2-e+δ}Fₑ. For example, the sodium-ion transition metal oxide includes the above NaₓMnₐFe_{b}Ni_{c}Q_{d}O_{2-e+δ}Fₑ, 0.7 ≤ x ≤ 1.2, 0 < a, 0.1 ≤ b ≤ 0.4, 0.1 ≤ c ≤ 0.4, 0 ≤ d ≤ 0.3, a + b + c + d = 1, 0 ≤ e ≤ 0.2, -0.1 ≤ δ ≤ 0.1, and Q includes at least one of Li, B, Mg, Al, Si, K, Ca, Ti, Co, Cu, Zn, Ga, Y, Zr, Nb, Mo, In, Sn, Sb, La, Ce, Ta, W, and Bi. For another example, the sodium-ion transition metal oxide includes the above NaₓMnₐNi_{c}Q_{d}O_{2-e+δ}Fₑ, 0.5 ≤ x ≤ 1.2, 0 < a, 0.1 ≤ c ≤ 0.3, 0 ≤ d ≤ 0.3, a + c + d = 1, 0 ≤ e ≤ 0.2, -0.1 ≤ δ ≤ 0.1, and Q includes at least one of Li, B, Mg, Al, Si, K, Ca, Ti, Co, Cu, Zn, Ga, Y, Zr, Nb, Mo, In, Sn, Sb, La, Ce, Ta, W, and Bi.

In some embodiments of this application, a preparation method of the above sodium-ion transition metal oxide may include: mixing a Na source, an Fe source, an Mn source, a Ni source, and a Q source according to the composition of the above sodium-ion transition metal oxide, pre-grinding them in an agate mortar, and then ball-milling them in a planetary ball mill for 1 h-8 h, for example, 2 h-7 h, 3 h-6 h, or 4 h-5 h to obtain a precursor mixture I; uniformly placing the obtained precursor mixture I in an open crucible; the heating the mixture in a muffle furnace at a heating rate of 2°C/min-5°C/min (for example, 2°C/min-3°C/min or 2°C/min-3°C/min) from room temperature to 900°C-1000°C, for example, 910°C-990°C, 920°C-980°C, 930°C-970°C, 940°C-960°C, or 940°C-950°C; and maintaining the mixture at the constant temperature for 10 h-20 h, for example, 11 h-19 h, 12 h-18 h, 13 h-17 h, 14 h-16 h, or 14 h-15 h in an atmosphere of dehumidified and carbon dioxide-removed air, to obtain a sodium-ion transition metal oxide after natural cooling.

It should be noted that due to potential Na source loss during subsequent calcination, a percentage of Na added may be slightly greater than a percentage of Na required in the composition of the sodium-ion transition metal oxide described above.

The Na source, Fe source, Mn source, Ni source, and Q source in this application are conventional materials in the art, and those skilled in the art can select them based on actual needs. For example, the Na source may include at least one of Na₂CO₃, NaHCO₃, NaOH, and Na₂O₂; the Fe source may include at least one of FeO, Fe₂O₃, and Fe₃O₄; the Mn source may include at least one of Mn₂O₃, Mn₃O₄, MnO, and MnO₂; the Ni source may include NiO; and the Q source may include at least one of oxides of Q, Q-containing salts, and other compounds.

It should be noted that if it is necessary to dope the positive electrode active material with the F element, at least one of the Na source, Fe source, Mn source, Ni source, and Q source uses at least one of the respective fluoride-containing salts and other compounds, for example, sodium fluoride, iron fluoride, manganese fluoride, nickel fluoride, and Q fluoride (fluoride salt of Q).

S200: Mix and sinter the sodium-ion transition metal oxide with an alkaline sodium compound.

In some embodiments of this application, the above sodium-ion transition metal oxide and alkaline sodium compound are mixed according to 0.1 ≤ (b + c)/w ≤ 0.5 (in the sodium-ion transition metal oxide, a molar amount of the iron element is denoted as b, a molar amount of the nickel is denoted as c, and based on a total mass of the positive electrode active material, a mass proportion of the alkaline sodium compound is w%), pre-ground in an agate mortar, and then ball-milled in a planetary ball mill for 1 h-8 h, for example, for 2 h-7 h, 3 h-6 h, or 4 h-5 h, to obtain a precursor mixture II. The obtained precursor mixture II is uniformly placed in an open crucible, then heated in a muffle furnace at a heating rate of 2°C/min-5°C/min (for example, 2°C/min-3°C/min or 2°C/min-3°C/min) from room temperature to 300°C-600°C, for example, 350°C-550°C, 400°C-500°C, or 450°C-500°C, and maintained at the constant temperature for 1 h-3 h, for example, for 1 h-2 h, 2 h-3 h, or 1 h-1.5 h in an atmosphere of dehumidified and carbon dioxide-removed air. After natural cooling, a positive electrode active material is obtained. This sintering process allows the alkaline sodium compound to be distributed more uniformly on the surface of the sodium-ion transition metal oxide and allow the alkaline sodium compound and surface of the sodium-ion transition metal oxide to be bonded better, forming a stable coating layer on the surface of the sodium-ion transition metal oxide, and improving the structural stability of the positive electrode active material under high voltages, thereby improving the cycling stability and energy density of batteries containing such materials under high voltages.

Thus, the above positive electrode active material with stable structure under high voltages can be prepared by using the method of this application, thereby improving the cycling stability and energy density of batteries containing such materials under high voltages.

A third aspect of this application provides a positive electrode plate including the positive electrode active material described in the first aspect or a positive electrode active material prepared by using the method described in the second aspect.

The positive electrode plate typically includes a positive electrode current collector and a positive electrode active material layer disposed on the positive electrode current collector, where the positive electrode active material layer includes the positive electrode active material.

The positive electrode current collector may use a conventional metal foil or a composite current collector (a metal material may be disposed on a polymer substrate to form a composite current collector). In an example, the positive electrode current collector may include at least one of copper foil, aluminum foil, nickel foil, stainless steel foil, stainless steel mesh, and carbon-coated aluminum foil.

The positive electrode active material layer optionally includes a conductive agent and a binder, where the conductive agent is used to improve the conductivity of the positive electrode active material layer, and the binder is used to firmly bond the positive electrode active material and the binder to the positive electrode current collector. The types of the conductive agent and binder are not specifically limited in this application, and can be selected based on actual needs.

In an example, the conductive agent may include at least one of superconducting carbon, acetylene black, carbon black, Ketjen black, carbon dots, carbon nanotubes, graphene, and carbon nanofiber; and the binder may include at least one of styrene-butadiene rubber (SBR), water-based acrylic resin (water-based acrylic resin), carboxymethyl cellulose (CMC), polyvinylidene fluoride (PVDF), polytetrafluoroethylene (PTFE), ethylene-vinyl acetate copolymer (EVA), and polyvinyl alcohol (PVA).

These materials are all commercially available.

A fourth aspect of this application provides a battery including the positive electrode plate described in the third aspect. Thus, the battery has excellent cycling stability and energy density under high voltages.

A battery refers to a battery that can be recharged to reactivate the active material for continued use after discharge.

It can be understood that the battery proposed in this application is a sodium-ion battery.

Typically, a battery includes a positive electrode plate, a negative electrode plate, a separator, and an electrolyte. During the charging and discharging processes of the battery, active ions intercalate and deintercalate back and forth between the positive electrode plate and the negative electrode plate. The separator is disposed between the positive electrode plate and the negative electrode plate to provide isolation. The electrolyte transports ions between the positive electrode plate and the negative electrode plate.

### [Negative electrode plate]

In the battery, the negative electrode plate typically includes a negative electrode current collector and a negative electrode active material layer disposed on the negative electrode current collector, where the negative electrode active material layer includes a negative electrode active material.

The negative electrode current collector may use a conventional metal foil or a composite current collector (for example, a metal material may be disposed on a polymer substrate to form a composite current collector). In an example, a copper foil may be used as the negative electrode current collector.

The negative electrode active material is not limited to any specific type and may include active materials known in the art for use in sodium-ion battery anodes, which can be selected by those skilled in the art based on actual needs. In an example, the negative electrode active material may include, but is not limited to, at least one of sodium metal, carbon materials, alloy materials, transition metal oxides and/or sulfides, phosphorus-based materials, and titanate materials. Specifically, the carbon materials may include at least one of hard carbon, soft carbon, amorphous carbon, and nanostructured carbon materials; the alloy materials may include alloy materials formed by at least one of Si, Ge, Sn, Pb, and Sb; the transition metal oxides and sulfides have a general formula MₓN_{y}, where M includes at least one of Fe, Co, Ni, Cu, Mn, Sn, Mo, Sb, and V, and N includes O or S; the phosphorus-based materials may include at least one of red phosphorus, white phosphorus, and black phosphorus; and the titanate materials may include at least one of Na₂Ti₃O₇, Na₂Ti₆O₁₃, Na₄Ti₅O₁₂, Li₄Ti₅O₁₂, and NaTi₂(PO₄)₃. These materials are all commercially available.

The negative electrode active material layer typically optionally includes a binder and a conductive agent, where the conductive agent is used to enhance the conductivity of the negative electrode active material layer, and the binder is used to firmly bond the negative electrode active material and the binder to the negative electrode current collector. The types of the conductive agent and binder are not specifically limited in this application, and can be selected based on actual needs.

In an example, the conductive agent may include at least one of superconducting carbon, acetylene black, carbon black, Ketjen black, carbon dots, carbon nanotubes, graphene, and carbon nanofiber.

In an example, the binder may include at least one of styrene-butadiene rubber (SBR), styrene-butadiene copolymers (SBCs), water-based acrylic resin (water-based acrylic resin), and carboxymethyl cellulose (CMC).

The negative electrode active material layer further optionally includes a thickener, such as carboxymethyl cellulose (CMC). However, this application is not limited to this, and other materials that can be used as thickeners for sodium-ion battery negative electrode plates may also be used in this application.

### [Electrolyte]

The electrolyte may include an electrolytic salt and a solvent.

In an example, the electrolytic sodium salt may include at least one of sodium hexafluorophosphate, sodium difluorooxalatoborate, sodium tetrafluoroborate, sodium bis(oxalate)borate, sodium perchlorate, sodium hexafluoroarsenate, sodium bis(fluorosulfonyl)imide, sodium trifluoromethanesulfonate, and sodium bis(trifluoromethanesulfonyl)imide.

In an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE).

In some embodiments, the electrolyte further includes an additive. For example, the additive may include a negative electrode film-forming additive, a positive electrode film-forming additive, and an additive that can improve certain performance of batteries, such as an additive that improves overcharge performance of batteries, an additive that improves high-temperature performance of batteries, or an additive that improves low-temperature performance of batteries.

### [Separator]

The above separator is not particularly limited in this application, and any well-known porous structure separator with electrochemical and mechanical stability can be selected based on actual needs. For example, the separator may include a single-layer or multi-layer film containing at least one of glass fiber, non-woven fabric, polyethylene, polypropylene, and polyvinylidene fluoride.

The battery is not limited to any particular shape in the embodiments of this application, and may be cylindrical, square, or of any other shape. FIG. 2 shows a secondary battery 1 of a square structure as an example.

In some embodiments, the battery may include an outer package. The outer package is configured to encapsulate the positive electrode plate, negative electrode plate, and electrolyte salt.

In some embodiments, the outer package may include a housing and a cover plate. The housing may include a bottom plate and side plates connected to the bottom plate, where the bottom plate and the side plates enclose an accommodating cavity. The housing has an opening communicating with the accommodating cavity, and the cover plate can cover the opening to seal the accommodating cavity.

The positive electrode plate, negative electrode plate, and separator can be formed into an electrode assembly through a winding process or a lamination process. The electrode assembly is encapsulated in the accommodating cavity. The battery may include one or several electrode assemblies, which may be adjusted based on needs.

In some embodiments, the outer package of the battery may include a hard shell, such as a hard plastic shell, an aluminum shell, or a steel shell.

The outer package of the battery may alternatively include a pouch, such as a pouch-type soft package. The soft package may be made of plastic, which, for example, may include at least one of polypropylene (PP), polybutylene terephthalate (PBT), and polybutylene succinate (PBS).

In some embodiments, the battery can be assembled into a battery module, and the battery module may include multiple batteries, where the specific number is adjustable based on the application and capacity of the battery module.

FIG. 3 shows a battery module 2 as an example. Referring to FIG. 3, in the battery module 2, multiple secondary batteries 1 may be sequentially arranged along a length direction of the battery module 2. Certainly, they can alternatively be arranged in any other manner. Further, the multiple secondary batteries 1 may be fixed by fasteners.

The battery module 2 may alternatively include a housing with an accommodating space, and the multiple secondary batteries 1 are accommodated in the accommodating space. In some embodiments, the above battery module may alternatively be assembled into a battery pack, and the number of the battery modules contained in the battery pack is adjustable based on the application and capacity of the battery pack.

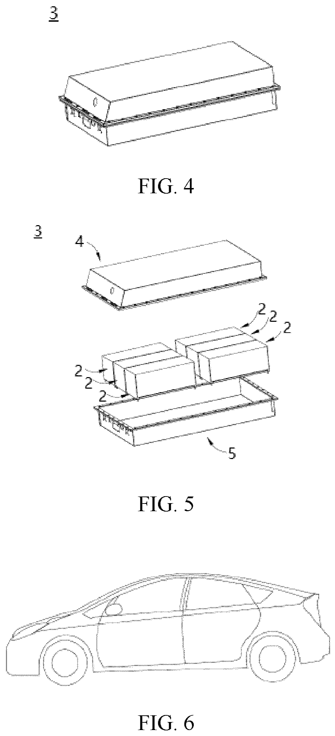

FIGs. 4 and 5 show a battery pack 3 as an example. Referring to FIG. 4 and FIG. 5, the battery pack 3 may include a battery box and multiple battery modules 2 disposed in the battery box. The battery box includes an upper box body 4 and a lower box body 5, with the upper box body 4 capable of covering the lower box body 5 to form a sealed space for accommodating the battery modules 2. The multiple battery modules 2 can be arranged in the battery box in any manner.

A fifth aspect of this application provides an electric device including the battery described in the fourth aspect. Specifically, the battery can serve as a power source of the electric device or as an energy storage unit of the electric device. The electric device may include, but is not limited to, mobile devices (for example, mobile phones and laptops), electric vehicles (for example, battery electric vehicles, hybrid electric vehicles, plug-in hybrid electric vehicles, electric bicycles, electric scooters, electric golf carts, and electric trucks), electric trains, ships, satellites, and energy storage systems.

FIG. 6 shows an electric device as an example. The electric device includes a battery electric vehicle, a hybrid electric vehicle, or a plug-in hybrid electric vehicle.

In another example, the electric device may include a mobile phone, a tablet, or a laptop. Such electric devices are typically required to be thin and lightweight designs and can use batteries as power sources.

To make the to-be-resolved technical problems, technical solutions, and beneficial effects of the embodiments of this application clearer, the following provides further detailed descriptions in conjunction with examples and drawings. It is apparent that the described embodiments are only some embodiments rather than all embodiments of this application. The following descriptions of at least one exemplary embodiment are merely illustrative and cannot limit this application and the application thereof. Based on the embodiments in this application, all other embodiments obtained by those of ordinary skill in the art without creative effort fall within the protection scope of this application.

### Example 1

### [Preparation of positive electrode active material]

A total amount of 30 g of a sample including Na₂CO₃, Mn₂O₃, Fe₂O₃, and NiO at a molar ratio of Na:Mn:Fe:Ni = 1:0.4:0.3:0.3 was weighed. The obtained sample was pre-ground in an agate mortar and then ball-milled in a planetary ball mill for 1 h to obtain a precursor mixture I. The precursor mixture I was uniformly placed in an open crucible, then heated in a muffle furnace at a heating rate of 5°C/min from room temperature to 950°C, and maintained at a constant temperature of 950°C for 15 h in an atmosphere of dehumidified and carbon dioxide-removed air. After natural cooling, a sodium-ion transition metal oxide with a composition Na_{0.89}Mn_{0.4}Fe_{0.3}Ni_{0.3}O₂ was obtained. The obtained sodium-ion transition metal oxide, together with 0.5 g of Na₂CO₃, was pre-ground in an agate mortar, and then ball-milled in the planetary ball mill for 1 h to obtain a precursor mixture II. The precursor mixture II was uniformly placed in an open crucible, then heated in a muffle furnace at a heating rate of 5°C/min from room temperature to 500°C, and maintained at a constant temperature of 500°C for 2 h in an atmosphere of dehumidified and carbon dioxide-removed air. After natural cooling, a positive electrode active material with a coating layer on the surface was obtained.

### [Preparation of positive electrode plate]

The obtained positive electrode active material, a conductive agent carbon black (Super P), and a binder polyvinylidene fluoride (PVDF) at a mass ratio of 80:15:5 were thoroughly stirred and mixed in a solvent N-methylpyrrolidone (NMP) to form a uniform positive electrode slurry. The positive electrode slurry was uniformly applied on upper and lower surfaces of a positive electrode current collector aluminum foil, followed by drying, cold pressing, and punching, to obtain a disc with a diameter of 14 mm, which was a positive electrode plate.

### [Preparation of negative electrode plate]

A sodium metal disc was used as the negative electrode plate.

### [Preparation of electrolyte]

Ethylene carbonate (EC) and diethyl carbonate (DEC) were mixed in equal volumes to obtain an organic solvent, and then NaClO₄ was dissolved in the organic solvent to prepare an electrolyte with a concentration of 1 mol/L.

### [Separator]

A porous polyethylene film was used as the separator.

### [Preparation of button battery]

The positive electrode plate, separator, and negative electrode plate were stacked in order, with the separator placed between the positive electrode plate and the negative electrode plate to provide isolation, and the prepared electrolyte was added to obtain a button battery.

The button batteries containing positive electrode active materials in Examples 2 to 30 were the same as that in Example 1, except that the parameters during the preparation of the positive electrode active material were different (as shown in Tables 1 to 6), the element Q was added in the form of an oxide of Q, and the F source was added in the form of a sodium source NaF.

The button battery containing the positive electrode active material in Comparative Example 1 was the same as that in Example 1, except that the preparation process of the positive electrode active material was different.

The preparation process of the positive electrode active material in Comparative Example 1 included: a total amount of 30 g of a sample including Na₂CO₃, Mn₂O₃, Fe₂O₃, and NiO at a molar ratio of Na:Mn:Fe:Ni = 1:0.4:0.3:0.3 was weighed. The obtained sample was pre-ground in an agate mortar and then ball-milled in a planetary ball mill for 1 h to obtain a precursor mixture I. The precursor mixture I was uniformly placed in an open crucible, then heated in a muffle furnace at a heating rate of 5°C/min from room temperature to 950°C, and maintained at a constant temperature of 950°C for 15 h in an atmosphere of dehumidified and carbon dioxide-removed air. After natural cooling, a positive electrode active material with a composition Na_{0.89}Mn_{0.4}Fe_{0.3}Ni_{0.3}O₂ was obtained.

The button batteries containing positive electrode active materials in Comparative Examples 2 to 3 and 6 were the same as that in Comparative Example 1, except that the parameters during the preparation of the positive electrode active material were different (as shown in Tables 1 to 6), the element Q was added in the form of an oxide of Q, and the F source was added in the form of a sodium source NaF.

The button batteries containing positive electrode active materials in Comparative Examples 4 and 5 were the same as that in Example 1, except that the parameters during the preparation of the positive electrode active material were different (as shown in Tables 1 to 6).

Considering the potential loss of the sodium element during sintering, to obtain a sodium-ion transition metal oxide in which the subscript x of the Na element was 1, the Na source needed to be added in excess by 0.05-0.2 during the mixing stage. For example, to obtain a sodium-ion transition metal oxide NaMn_{0.4}Fe_{0.3}Ni_{0.3}O₂, the Na₂CO₃, Mn₂O₃, Fe₂O₃, and NiO were weighed at a molar ratio of Na:Mn:Fe:Ni = 1.05-1.2:0.4:0.3:0.3. It should also be noted that the alkaline sodium compounds in Examples 1 to 30 and Comparative Examples 4 and 5 were all sodium carbonate.

The compositions of the positive electrode active materials in the batteries of Examples 1 and 30 and Comparative Examples 1 and 6 of this application are shown in Tables 1 and 6.

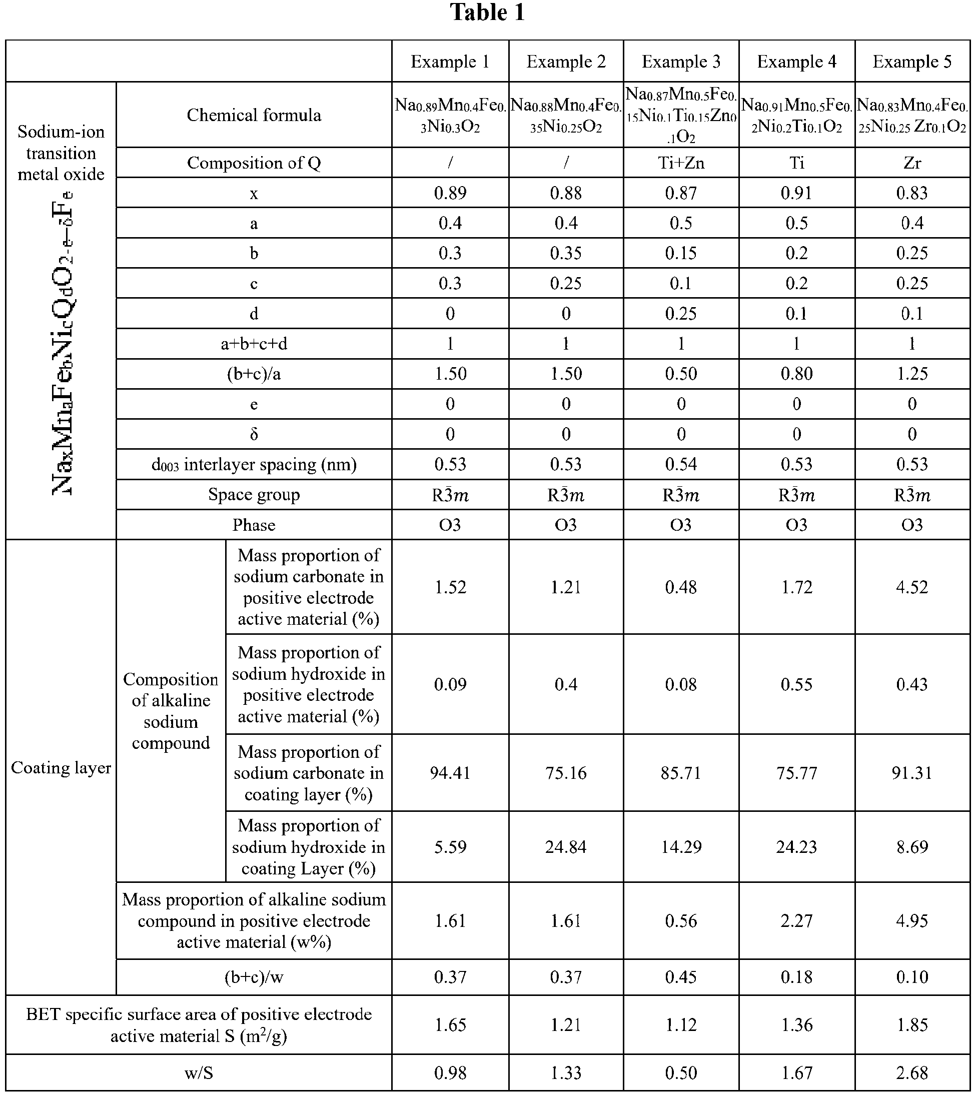

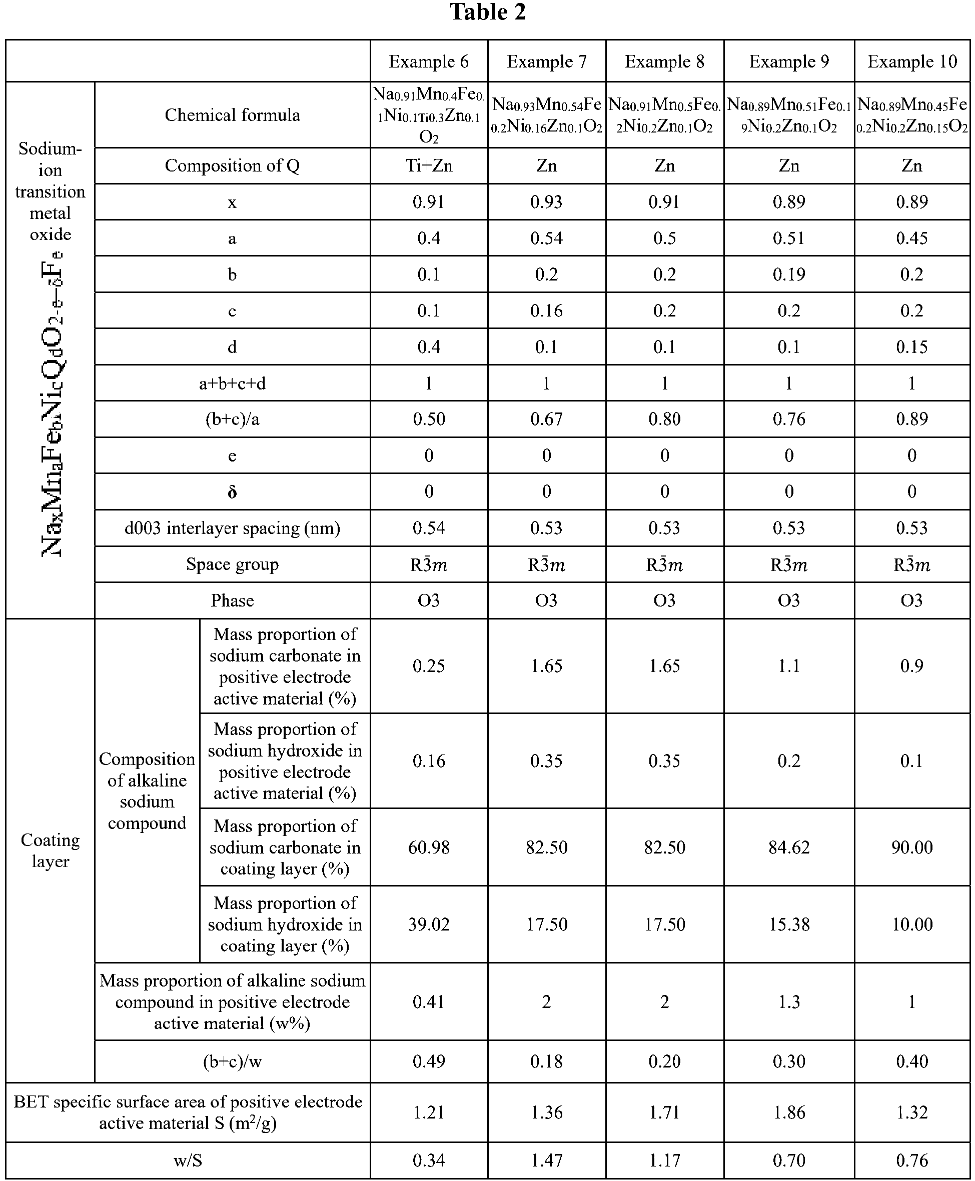

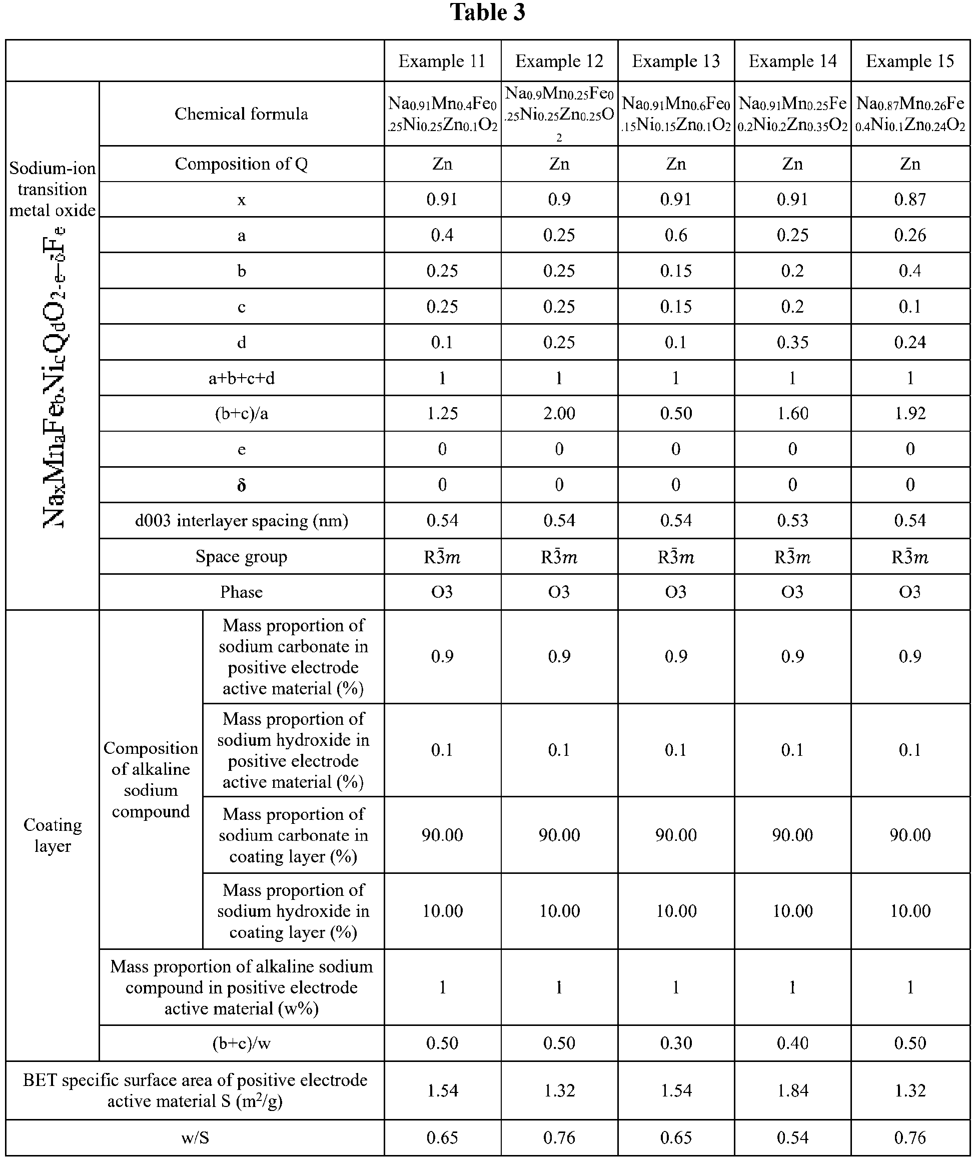

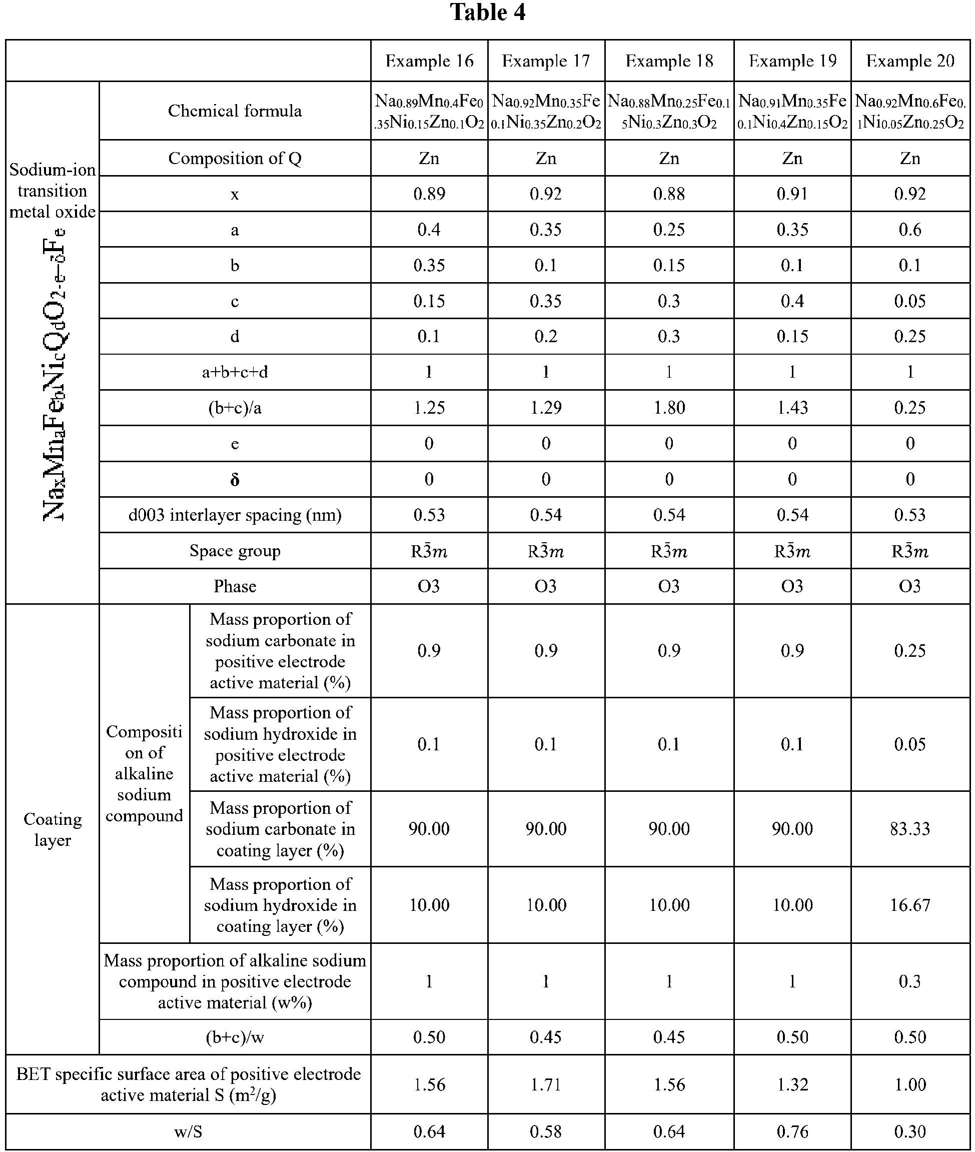

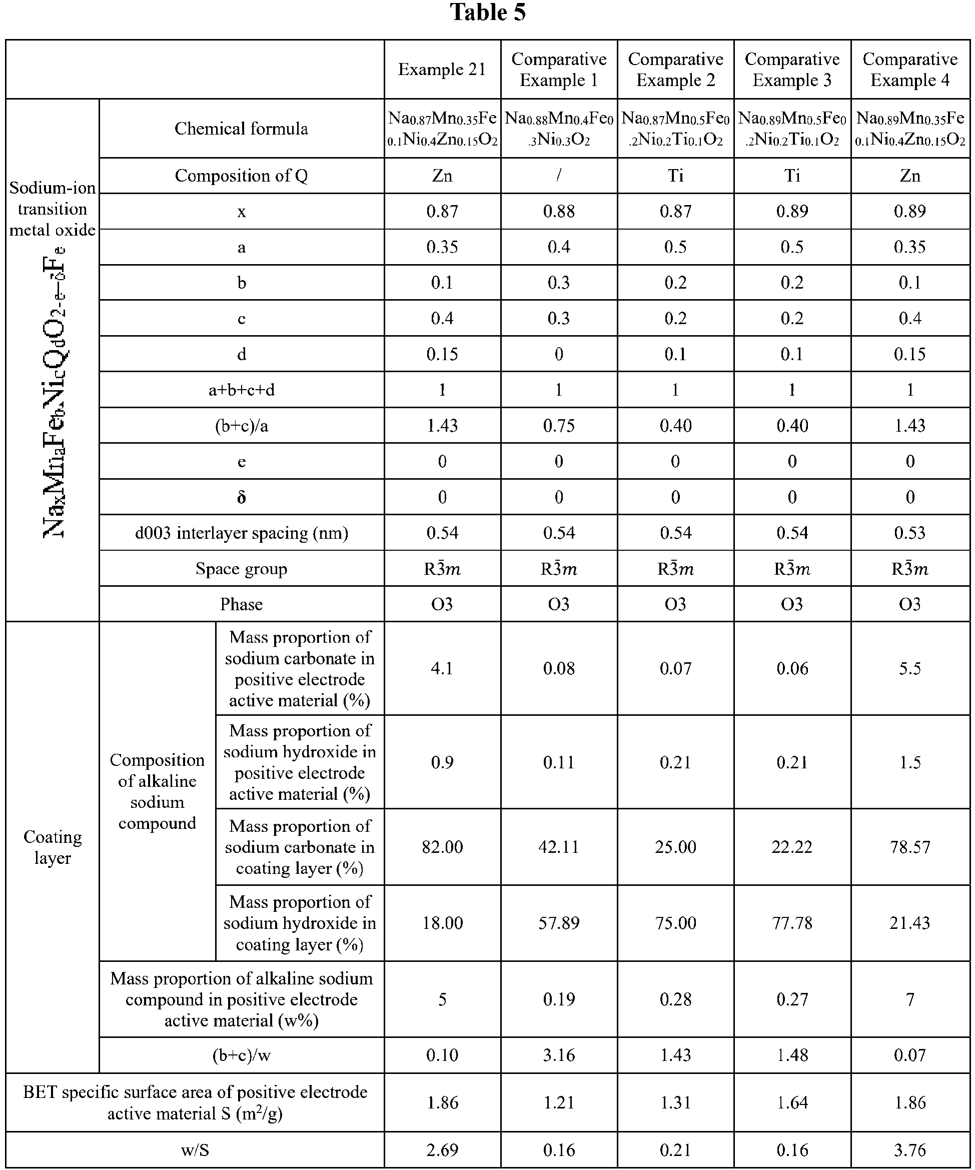

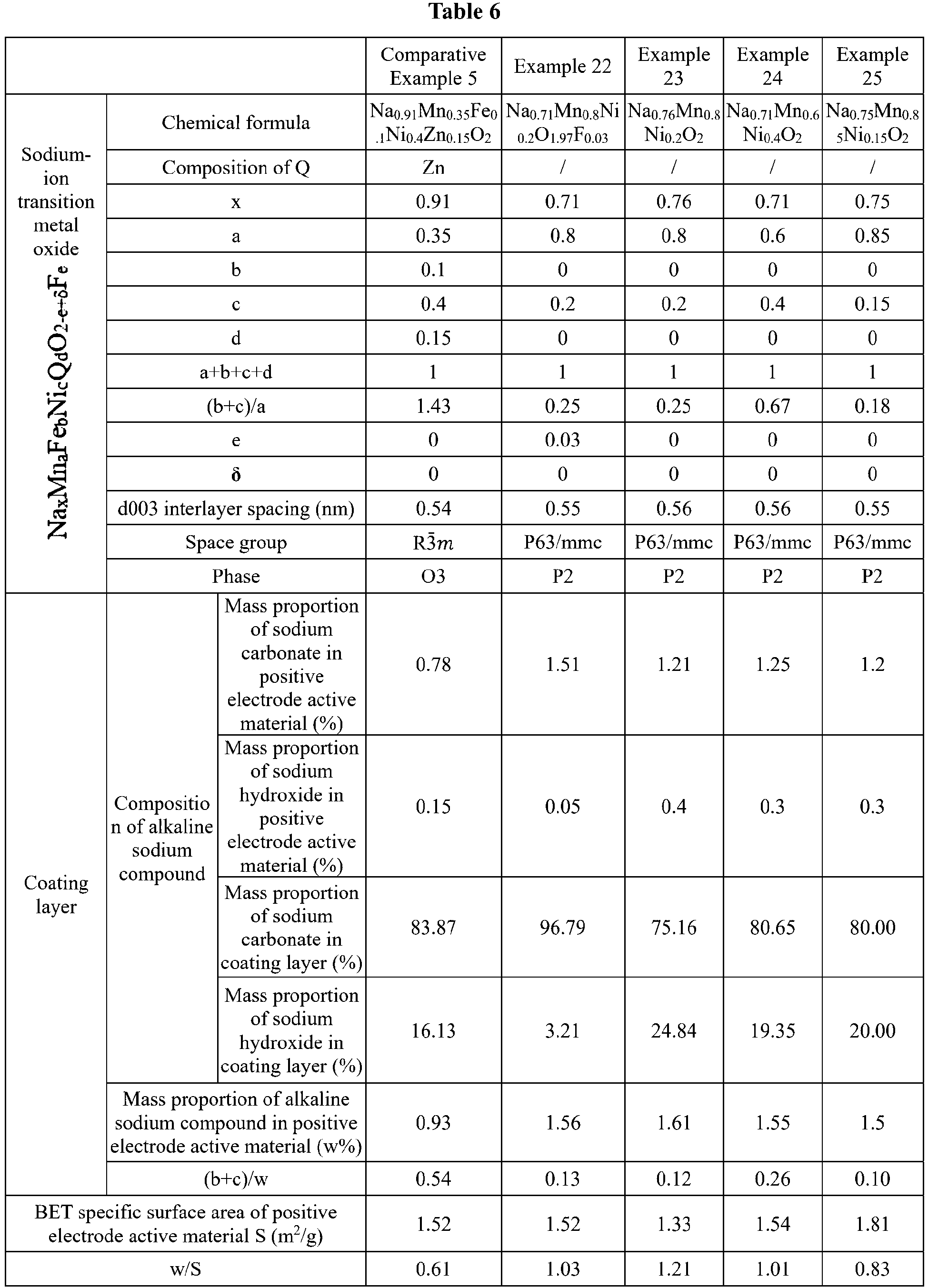

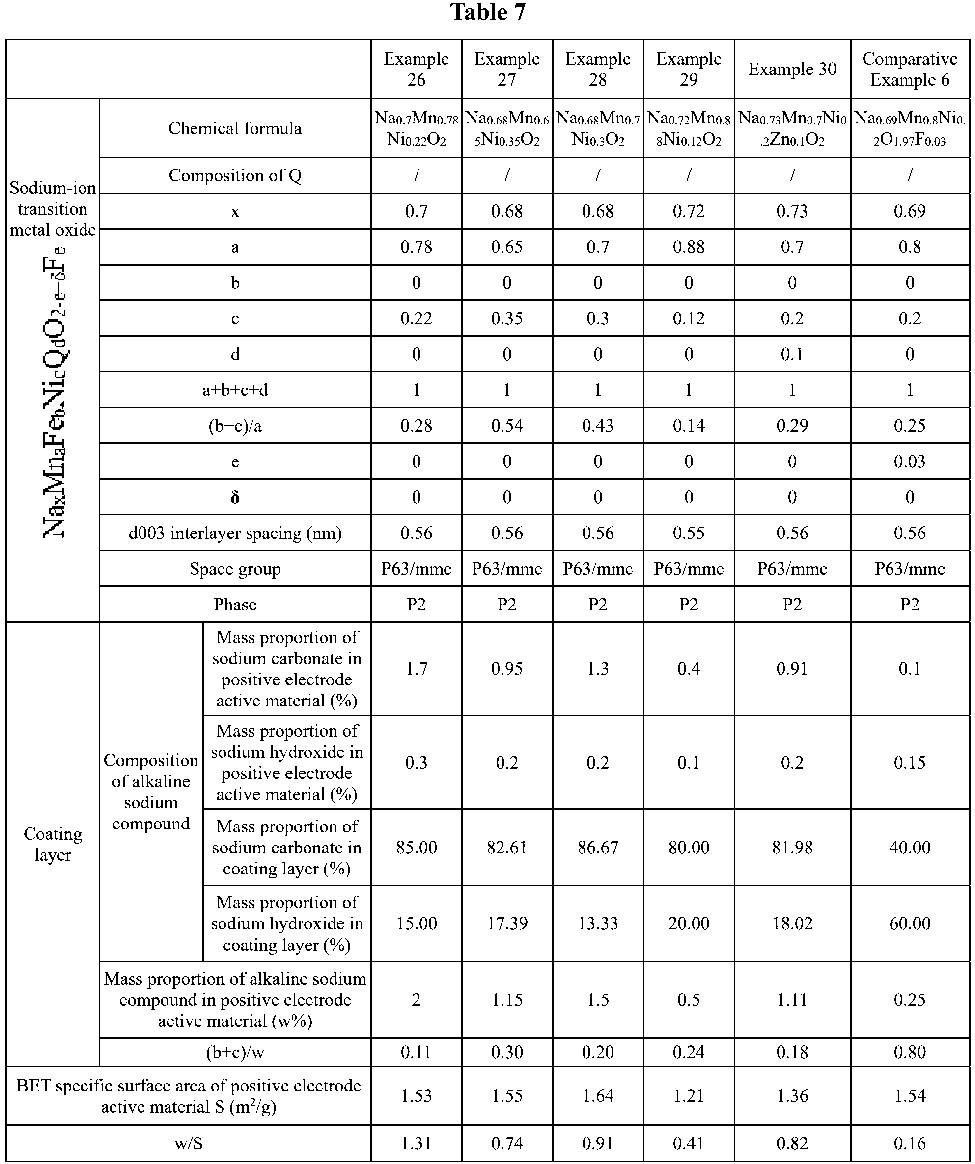

The surface morphology and the BET specific surface area, as well as the composition, phase, space group, interlayer spacing, and alkaline sodium compound proportion of the sodium-ion transition metal oxide in the positive electrode active materials in Examples 1 to 30 and Comparative Examples 1 to 6 were characterized, with the characterization results shown in Tables 1 to 6. Additionally, the initial discharge specific capacity of the positive electrode active material and the cycling performance of the button battery obtained in Examples 1 to 30 and Comparative Examples 1 to 6 were characterized, with the characterization results shown in Table 7.

### Test methods:

### (1) Surface morphology characterization of positive electrode active material:

The surface morphology of the positive electrode active material was characterized using scanning electron microscopy SEM. For example, a field emission scanning electron microscope (Zeiss Gemini360) was used to characterize the surface morphology of the positive electrode active material in accordance with the JY/T010-1996 standard.

### (2) BET specific surface area characterization of positive electrode active material:

A Micromeritics Gemini VII 2390 multi-station automatic surface area and pore analyzer was used, and approximately 7 g of the sample was placed in a 9 cc long tube with a bulb, degassed at 200°C for 2 h, and then tested in a main unit to obtain the BET specific surface area data of the positive electrode active material 1000.

### (3) Composition characterization of sodium-ion transition metal oxide:

Inductively coupled plasma emission spectroscopy was used, where for instrument standards, reference is made to EPA6010D-2014 Inductively Coupled Plasma Atomic Emission Spectroscopy. The sample was chemically processed and digested into a solution, atomized into plasma to excite characteristic spectral lines of elements, and the wavelength and intensity of the spectral lines (proportional to concentration) were used for qualitative and quantitative analysis of element percentages.

The percentage of the alkaline sodium compound Na₂CO₃ in the coating layer of the positive electrode active material could be measured using instruments and methods well known in the art. For example, the percentage was tested in accordance with the GB/T 9736-2008 standard. In a carbon dioxide-removed atmosphere, 30 g of the obtained positive electrode active material powder was weighed, added with 100 ml pure water, stirred for 30 min, left standing for 10 min, and filtered, and a certain amount of filtrate was taken. A 0.05 mol/L hydrochloric acid standard solution was used for titration, with the used instrument being a Mettler T5 titrator.

The percentage of the alkaline sodium compound NaOH in the coating layer of the positive electrode active material could be measured using instruments and methods well known in the art. For example, the percentage was tested in accordance with the GB/T 9736-2008 standard. In a carbon dioxide-removed and dehumidified atmosphere, 30 g of the obtained layered oxide powder was weighed, added with 100 ml anhydrous ethanol, stirred for 30 min, left standing for 10 min, and filtered, and 10 mL of filtrate was taken, diluted with 50 mL ultrapure water, and then titrated with a 0.05 mol/L hydrochloric acid standard solution, with the used instrument being a Mettler T5 titrator.

The percentage of the sodium element in the composition of the sodium-ion transition metal oxide could be calculated by subtracting a total amount of the alkaline sodium compounds NaOH and Na₂CO₃ in the coating layer that was obtained using the above test methods from a total percentage of the sodium element that was obtained using the above inductively coupled plasma emission spectroscopy. The percentages of other elements in the composition of the sodium-ion transition metal oxide were obtained using the above inductively coupled plasma emission spectroscopy, and thus the composition of the sodium-ion transition metal oxide could be obtained.

(4) Test for mass proportion of alkaline sodium compound in positive electrode active material w%: the mass proportion w% was obtained by summing the percentages of the alkaline sodium compounds NaOH and Na₂CO₃ in the coating layer.

### (5) Tests for phase, interlayer spacing d₀₀₃ of the 003 crystal plane, and space group of sodium-ion transition metal oxide:

In a dry room or glovebox, a to-be-tested sample was ground in an agate mortar and passed through a 350-mesh sieve; an appropriate amount of the sieved sample was taken and placed in the center of a groove of a sample holder to ensure that the loose sample powder was slightly higher than the plane of the sample holder; the surface of the sample was lightly pressed with a glass slide so that the surface of the sample is leveled to be flush with the plane of the holder; and excess powder was scraped off. After sample preparation, testing was performed using a Bruker D8A_A25 X-ray powder diffractometer from Bruker AxS in Germany, where CuK_{α} rays were used as a radiation source, a ray wavelength λ = 1.5406 Å, a 20 scanning angle range was 5°-60°, and a scanning rate was 4°/min for testing. After testing, the interlayer spacing d₀₀₃ of the 003 crystal plane was obtained based on an angle corresponding to the 003 crystal plane, the Bragg equation 2d•sinθ = λ, and each unit cell of the 003 crystal plane including three transition metal layers. The space group and crystal phase of the sample were confirmed by comparing an XRD diffraction peak of the sample with a standard card in XRD analysis software.

### (6) Test for initial discharge specific capacity and cycling performance of positive electrode active material:

At 25°C, a button battery was charged at a constant current density of 10 mA/g to 4.2 V, and then discharged at a constant current density of 10 mA/g to 1.5 V to obtain an initial discharge specific capacity C₀ of the button battery. Subsequently, the battery was subjected to 50 constant-current charge-discharge cycles at a current density of 10 mA/g, and a discharge specific capacity C₁ of the 50th cycle was taken. The capacity retention rate after 50 cycles = C₁/C₀ × 100%.

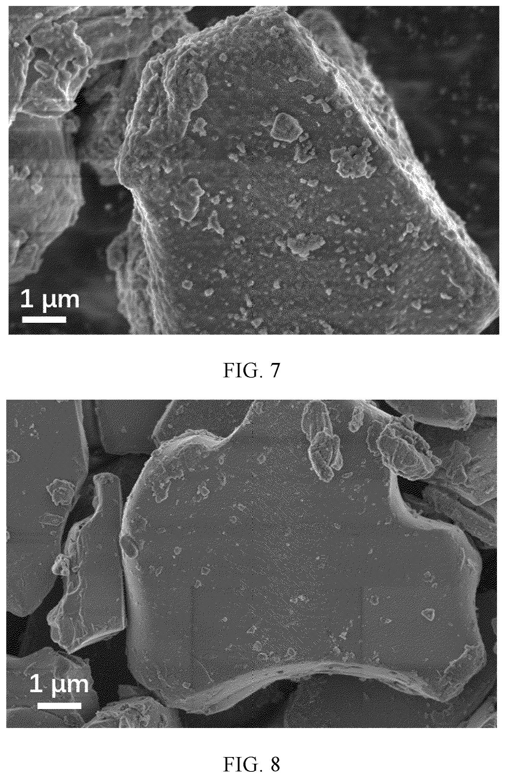

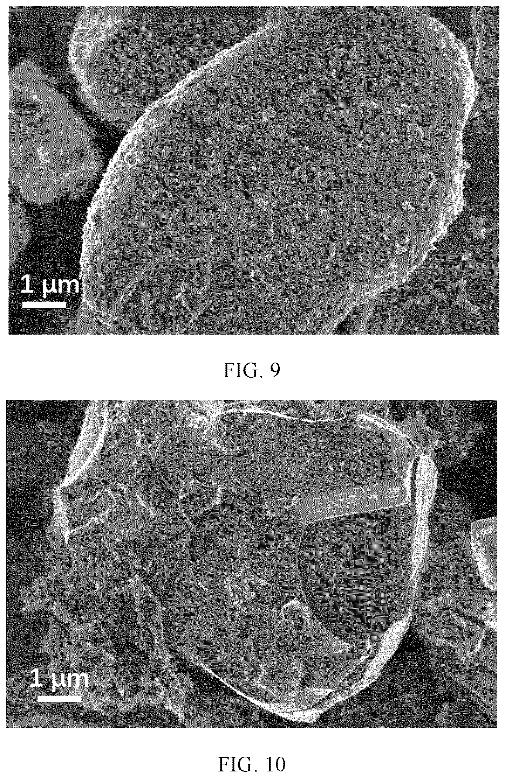

FIG. 7 is a surface morphology image of a positive electrode active material prepared in Example 1, and FIG. 8 is a surface morphology image of a positive electrode active material prepared in Comparative Example 1. From FIG. 7 and FIG. 8, it can be seen that the positive electrode active material in Example 1 has a uniform coating layer on the surface, while the surface of the positive electrode active material in Comparative Example 1 is relatively clean, which is not continuously coated with a noticeable coating layer. Additionally, the surfaces of the positive electrode active materials in Comparative Examples 2, 3 and 6 are also not continuously coated with a noticeable coating layer. FIG. 9 is a surface morphology image of a positive electrode active material disassembled from a button battery of Example 1 after 50 cycles, and FIG. 10 is a surface morphology image of a positive electrode active material disassembled from a button battery of Comparative Example 1 after 50 cycles. From FIG. 9 and FIG. 10, it can be seen that after 50 cycles, the positive electrode active material of the button battery in Example 1 still has a uniform coating layer on the surface, without obvious cracks; while the positive electrode active material of the button battery in Comparative Example 1 has obvious cracks on the surface after 50 cycles. This indicates that the positive electrode active material in Example 1 has higher structural stability under high voltages compared to that in Comparative Example 1, so that the cycling performance and energy density of the battery in Example 1 can be improved.

**Table 7**

| | Initial discharge specific capacity (mAh/g) | Capacity retention rate after 50 cycles (%) |
|---|---|---|
| Example 1 | 162 | 98 |
| Example 2 | 163 | 95 |
| Example 3 | 164 | 94 |
| Example 4 | 159 | 93 |
| Example 5 | 162 | 92 |
| Example 6 | 160 | 90 |
| Example 7 | 158 | 96 |
| Example 8 | 164 | 99 |
| Example 9 | 158 | 99 |
| Example 10 | 163 | 99 |
| Example 11 | 163 | 96 |
| Example 12 | 161 | 91 |
| Example 13 | 162 | 95 |
| Example 14 | 161 | 93 |
| Example 15 | 161 | 92 |
| Example 16 | 159 | 95 |
| Example 17 | 164 | 92 |
| Example 18 | 163 | 90 |
| Example 19 | 161 | 95 |
| Example 20 | 163 | 90 |
| Example 21 | 164 | 92 |
| Comparative Example 1 | 155 | 82 |
| Comparative Example 2 | 155 | 84 |
| Comparative Example 3 | 154 | 86 |
| Comparative Example 4 | 152 | 86 |
| Comparative Example 5 | 155 | 86 |
| Example 22 | 163 | 92 |
| Example 23 | 162 | 93 |
| Example 24 | 162 | 95 |
| Example 25 | 163 | 94 |
| Example 26 | 164 | 93 |
| Example 27 | 165 | 97 |
| Example 28 | 161 | 97 |
| Example 29 | 162 | 96 |
| Example 30 | 163 | 94 |
| Comparative Example 6 | 150 | 86 |

Conclusion: From the data in Tables 1 to 6, it can be learned that both sodium carbonate and sodium hydroxide are detected in the positive electrode active materials of Examples 1 to 31 and Comparative Examples 5 to 7, where the sodium hydroxide possibly comes from a water absorption reaction of sodium oxide on the surface of the positive electrode active material. Sodium carbonate and sodium hydroxide are also detected in the positive electrode active materials of Comparative Examples 1 and 4, where the sodium carbonate comes from a sodium source used in the mixing process, and the sodium hydroxide possibly comes from a water absorption reaction of sodium oxide on the surface of the positive electrode active material. From the data in Table 7, it can be learned that Examples 1 to 30 exhibit superior capacity retention rates under high voltages compared to Comparative Examples 1 to 6. This indicates that the positive electrode active material of this application can improve the cycling stability of the battery. Additionally, the initial discharge specific capacities of the positive electrode active materials in Examples 1 to 30 are not less than 158 mAh/g. This indicates that the batteries of this application have excellent energy density under high voltages. In conclusion, the positive electrode active material of this application can improve both the cycling stability and energy density of batteries under high voltages.

Ultimately, it should be noted that the above embodiments are only used to illustrate the technical solutions of this application and are not intended to limit them. Although this application has been described in detail with reference to the foregoing embodiments, those of ordinary skill in the art should understand that modifications can still be made to the technical solutions described in the foregoing embodiments, or equivalent substitutions can be made to some or all of the technical features thereof. These modifications or substitutions do not cause the essence of the corresponding technical solutions to depart from the scope of the technical solutions of the embodiments of this application and should all be included within the scope of the claims and specification of this application. In particular, as long as there is no structural conflict, the technical features mentioned in the embodiments can be combined in any manner. This application is not limited to the specific embodiments disclosed herein but includes all technical solutions falling within the scope of the claims.

## Claims

1. A positive electrode active material, comprising:
a core, the core comprising a sodium-ion transition metal oxide containing the iron element and/or nickel element, wherein in the sodium-ion transition metal oxide, a molar amount of the iron element is denoted as b, a molar amount of the nickel is denoted as c, 0 ≤ b ≤ 0.4, and 0 ≤ c ≤ 0.4; and
a coating layer, wherein the coating layer is disposed on at least a portion of a surface of the core, the coating layer contains an alkaline sodium compound, and based on a total mass of the positive electrode active material, a mass proportion of the alkaline sodium compound is w%, which satisfies: 0.1 ≤ (b + c)/w ≤ 0.5.

2. The positive electrode active material according to claim 1, wherein 0.2 ≤ (b + c)/w ≤ 0.4.

3. The positive electrode active material according to claim 1 or 2, wherein the mass proportion of the alkaline sodium compound w% is 0.3wt%-5wt%, optionally 0.5wt%-2wt%.

4. The positive electrode active material according to any one of claims 1 to 3, wherein the alkaline sodium compound comprises at least one of sodium hydroxide and sodium carbonate, optionally sodium carbonate.

5. The positive electrode active material according to claim 4, wherein based on a total mass of the coating layer, a mass proportion of the sodium carbonate is greater than or equal to 80%.

6. The positive electrode active material according to claim 4 or 5, wherein based on the total mass of the coating layer, a mass proportion of the sodium hydroxide is less than or equal to 10%.

7. The positive electrode active material according to any one of claims 1 to 6, wherein the sodium-ion transition metal oxide comprises: NaₓMnₐFe_{b}Ni_{c}Q_{d}O_{2-e+δ}Fₑ, wherein 0.5 ≤ x ≤ 1.2, 0 < a, 0 ≤ b ≤ 0.4, 0 ≤ c ≤ 0.4, 0 ≤ d, a + b + c + d = 1, 0 ≤ e ≤ 0.2, -0.1 ≤ δ ≤ 0.1, and Q comprises at least one of Li, B, Mg, Al, Si, K, Ca, Ti, Co, Cu, Zn, Ga, Y, Zr, Nb, Mo, In, Sn, Sb, La, Ce, Ta, W, and Bi.

8. The positive electrode active material according to any one of claims 1 to 7, wherein the sodium-ion transition metal oxide comprises: NaₓMnₐFe_{b}Ni_{c}Q_{d}O_{2-e+δ}Fₑ, wherein 0.7 ≤ x ≤ 1.2, 0 < a, 0.1 ≤ b ≤ 0.4, 0.1 ≤ c ≤ 0.4, 0 ≤ d ≤ 0.3, a + b + c + d = 1, 0 ≤ e ≤ 0.2, -0.1 ≤ δ ≤ 0.1, and Q comprises at least one of Li, B, Mg, Al, Si, K, Ca, Ti, Co, Cu, Zn, Ga, Y, Zr, Nb, Mo, In, Sn, Sb, La, Ce, Ta, W, and Bi, optionally at least one of B, Mg, Al, Si, Ca, Ti, Co, Cu, Zn, Zr, Nb, Mo, La, and Bi, wherein based on the total mass of the positive electrode active material, the mass proportion of the alkaline sodium compound is 1wt%-2wt%.

9. The positive electrode active material according to claim 8, wherein at least one of the following conditions is satisfied: 0.3 ≤ a ≤ 0.6; 0.15 ≤ b ≤ 0.35; 0.15 ≤ c ≤ 0.35; and 0.1 ≤ d ≤ 0.2.

10. The positive electrode active material according to claim 8 or 9, wherein 0.5 ≤ (b + c)/a ≤ 2, optionally 0.5 ≤ (b + c)/a ≤ 1.5.

11. The positive electrode active material according to any one of claims 8 to 10, wherein a phase of the sodium-ion transition metal oxide comprises an O3 phase, a space group comprises R3m, and an interlayer spacing is 0.53 nm-0.55 nm.

12. The positive electrode active material according to any one of claims 1 to 7, wherein the sodium-ion transition metal oxide comprises: NaₓMnₐNi_{c}QdO_{2-e+δ}Fₑ, wherein 0.5 ≤ x ≤ 1.2, 0 < a, 0.1 ≤ c ≤ 0.3, 0 ≤ d ≤ 0.3, a + c + d = 1, 0 ≤ e ≤ 0.2, -0.1 ≤ δ ≤ 0.1, and Q comprises at least one of Li, B, Mg, Al, Si, K, Ca, Ti, Co, Cu, Zn, Ga, Y, Zr, Nb, Mo, In, Sn, Sb, La, Ce, Ta, W, and Bi, optionally at least one of B, Mg, Al, Si, Ca, Ti, Co, Cu, Zn, Zr, Nb, Mo, La, and Bi, wherein based on the total mass of the positive electrode active material, the mass proportion of the alkaline sodium compound is 0.5wt%-1.5wt%.

13. The positive electrode active material according to claim 12, wherein at least one of the following conditions is satisfied: 0.5 ≤ a ≤ 0.8; 0.15 ≤ c ≤ 0.25; and 0.05 ≤ d ≤ 0.15.

14. The positive electrode active material according to claim 12 or 13, wherein 0.125 ≤ c/a ≤ 0.45, optionally 0.2 ≤ c/a ≤ 0.3.

15. The positive electrode active material according to any one of claims 11-14, wherein a phase of the sodium-ion transition metal oxide comprises a P2 phase, a space group comprises P63/mmc, and an interlayer spacing is 0.55 nm-0.57 nm.

16. The positive electrode active material according to any one of claims 1 to 15, wherein a BET specific surface area of the positive electrode active material is S m²/g, and S and w satisfy the relationship: 0.3 ≤ w/S ≤ 3, optionally 0.5 ≤ w/S ≤ 2.

17. The positive electrode active material according to any one of claims 1 to 16, wherein the positive electrode active material satisfies at least one of the following conditions:
Dᵥ50 of the positive electrode active material is 2 µm-20 µm, optionally 4 µm-15 µm;
the BET specific surface area of the positive electrode active material is 0.2 m²/g-2 m²/g, optionally 0.3 m²/g-2 m²/g; and
a compacted density of the positive electrode active material under a pressure of 300 MPa is 3.1 g/cm³-3.8 g/cm³, optionally 3.2 g/cm³-3.6 g/cm³.

18. A method for preparing a positive electrode active material, comprising:
providing a sodium-ion transition metal oxide containing the iron element and/or nickel element, wherein in the sodium-ion transition metal oxide, a molar amount of the iron element is denoted as b, a molar amount of the nickel is denoted as c, 0 ≤ b ≤ 0.4, and 0 ≤ c ≤ 0.4; and
mixing and sintering the sodium-ion transition metal oxide with an alkaline sodium compound to obtain the positive electrode active material,
wherein based on a total mass of the positive electrode active material, a mass proportion of the alkaline sodium compound is w%, which satisfies: 0.1 ≤ (b + c)/w ≤ 0.5.

19. A positive electrode plate, wherein the positive electrode plate comprises the positive electrode active material according to any one of claims 1 to 17 or a positive electrode active material prepared by the method according to claim 18.

20. A battery, wherein the battery comprises the positive electrode plate according to claim 19.

21. An electric device, comprising the battery according to claim 20.
